Europäisches Patentamt

European Patent Office

Office européen des brevets

(19)

(11) **EP 0 887 534 B1**

(12) **EUROPEAN PATENT SPECIFICATION**

(45) Date of publication and mention
of the grant of the patent:
**10.12.2003 Bulletin 2003/50**

(51) Int Cl.$^7$: **F02D 41/02**, F02D 41/38

(21) Application number: **98111729.4**

(22) Date of filing: **25.06.1998**

(54) **Apparatus and method of controlling throttle valve in engine**

Vorrichtung und Verfahren zur Steuerung einer Drosselklappe in einer Brennkraftmaschine

Méthode et appareil de contrôle du papillon dans un moteur à combustion interne

(84) Designated Contracting States:
**DE FR GB**

(30) Priority: **26.06.1997 JP 17056397**
**16.04.1998 JP 10664998**
**16.04.1998 JP 10665098**

(43) Date of publication of application:
**30.12.1998 Bulletin 1998/53**

(73) Proprietor: **TOYOTA JIDOSHA KABUSHIKI KAISHA**
**Aichi-ken 471-8571 (JP)**

(72) Inventors:
• **Kizaki, Mikio**
**Toyota-shi, Aichi-ken, 471-8571 (JP)**
• **Ito, Yoshiyasu**
**Toyota-shi, Aichi-ken, 471-8571 (JP)**

• **Yamamoto, Yoshikai**
**Toyota-shi, Aichi-ken, 471-8571 (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4-6**
**80336 München (DE)**

(56) References cited:
**EP-A- 0 269 118      EP-A- 0 607 003**
**DE-A- 19 510 747**

• **PATENT ABSTRACTS OF JAPAN vol. 015, no. 513 (M-1196), 26 December 1991 (1991-12-26) & JP 03 225038 A (MITSUBISHI ELECTRIC CORP), 4 October 1991 (1991-10-04)**

**Description**

**BACKGROUND OF THE INVENTION**

The present invention relates to an apparatus and method of controlling a throttle valve that is actuated by a stepping motor and is located in an air-intake passage in an engine.

The engine output of a diesel engine is mainly adjusted by controlling the amount of. fuel injection. Conventionally, therefore, precise control of the amount of intake air has not been required. The recent demand for cleaning diesel exhaust gas however requires an exhaust gas recirculation (EGR) apparatus. The EGR apparatus recirculates part of the exhaust gas, discharged from each combustion chamber, into the air-intake passage. The mixing ratio of the exhaust gas to the intake air that flows through the air-intake passage is an important factor in acquiring as clean an exhaust gas as possible without interfering with the operation of the engine. The proper mixing ratio requires fine control of the amount of the intake air.

An apparatus for accurately controlling the amount of intake air is disclosed in, for example, Japanese Examined Patent Publication No. 61-20268. This apparatus has a throttle valve capable of functioning without being interlocked with the acceleration pedal and a motor that can be rotated in both the forward and reverse directions to actuate the throttle valve. Japanese Unexamined Patent Publication No. 3-225038 and Japanese Unexamined Patent Publication No. 61-226540 disclose intake-air amount control apparatuses that use a stepping motor as a throttle valve actuating motor. The rotational angle of the stepping motor is controlled very accurately by a drive pulse, which is input to the motor. The stepping motor is therefore capable of controlling the angle of the throttle valve with high precision.

When the drive voltage, or battery voltage that is to be applied to the stepping motor, falls below a normal level, the drive torque of the motor becomes insufficient, making it likely for the motor to step-out. When step-out occurs, the rotational angle of the motor does not accurately correspond to the angle of the throttle valve, which cannot be precisely controlled as a consequence. When the battery voltage drops, therefore, the apparatuses disclosed in Japanese Unexamined Patent Publication No. 3-225038 and Japanese Unexamined Patent Publication No. 61-226540 set the speed of the stepping motor slower than the normal speed in order to secure a sufficient drive torque of the motor and avoid the step-out. In other words, when something interferes with the operation of the motor, the motor's operation is restricted to avoid such interference.

When the key switch is turned off or some engine failure occurs, the engine should be stopped instantly. This requires that the throttle valve should be promptly closed to inhibit air supply to the combustion chambers. If the speed of the stepping motor is slower than the normal speed, the throttle valve cannot be rapidly closed. Thus, it is impossible to stop the engine instantaneously and vibration increases when the engine is stopped. With the motor's operation restricted as in the above case, the throttle valve cannot be quickly set to a predetermined angle.

Document DE 195 10 747 A1 (document D1) discloses an apparatus and a method for controlling a throttle valve as defined in the preambles or the Independent claims. In detail, document D1 discloses a system and actuator for controlling power of an engine by controlling throttle valve. The angle position thereof is changeable by a stepping motor controlled by a controller. Moreover, a mechanic idle stop is provided which limits the moving of the throttle valve by inhibiting the operation of the motor.

SUMMARY OF THE INVENTION

Accordingly, it is an objective of the present invention to provide an improved control apparatus and control method, which can well control a throttle valve using a stepping motor.

This object is solved by an apparatus for controlling a throttle valve as set out in the independent claim 1, and alternatively by a method for controlling a throttle valve as set out in the independent claim 11.

Further advantageous developments are set out in the dependent claims.

Other aspects and advantages of the invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the presently preferred embodiments together with the accompanying drawings in which:

Figure 1 is a schematic structural diagram illustrating a diesel engine equipped with a throttle valve control apparatus according to a first embodiment of the invention;

Figure 2 is a block diagram showing the electric constitution of the diesel engine in Figure 1;

Figure 3 is a flowchart depicting EGR control procedures according to the first embodiment;

Figure 4A is a graph shoving the relationship among engine speed, fuel injection amount and base target lift amount;

Figure 4B is a graph showing the relationship between coolant temperature and a coolant temperature compensation coefficient;

Figure 4C is a graph showing the relationship between intake pressure and an intake pressure compensation coefficient;

Figure 4D is a graph showing the relationship between a final target lift amount and a base control amount;

Figure 4E is a graph showing the relationship between a value, obtained by subtracting an actual lift amount from the final target lift amount, and a feedback control amount;

Figure 5 is a flowchart illustrating procedures of computing the target step number of a stepping motor according to the first embodiment;

Figure 6 is a graph depicting the relationship among engine speed, fuel injection amount and a target step number;

Figure 7 is a flowchart illustrating steps for computing the actual step number of the stepping motor according to the first embodiment;

Figure 8 is a flowchart showing steps for setting a pulse rate according to the first embodiment;

Figure 9 is a schematic structural diagram illustrating a diesel engine equipped with a throttle valve control apparatus according to a second embodiment of the invention;

Figure 10 is a side cross-sectional view showing the throttle valve and a valve driving mechanism;

Figure 11 is a cross-sectional view taken along the line 11-11 in Figure 10;

Figure 12 is a cross-sectional view partly showing a driven gear provided in the valve driving mechanism in Figure 11 and its peripheral structure;

Figure 13 is a front cross-sectional view of a stepping motor;

Figure 14 is a side cross-sectional view of the stepping motor in Figure 13;

Figure 15A is a cross-sectional view taken along the line 15A-15A in Figure 14;

Figure 15B is a cross-sectional view taken along the line 15B-15B in Figure 14;

Figure 16A is a diagram for explaining the operational principle of a stepping motor;

Figure 16B is a diagram for explaining the operational principle of the stepping motor;

Figure 17 is a table for explaining how to apply a voltage to each coil of the stepping motor;

Figure 18 is a graph showing the relationship among the engine speed, fuel injection amount and target step number;

Figure 19 is a flowchart depicting control steps for the stepping motor according to the second embodiment;

Figure 20 is a table showing the relationship between a battery voltage and a pulse rate;

Figure 21 is a flowchart illustrating steps for computing the target step number of a stepping motor according to a third embodiment; and

Figure 22 is a flowchart showing an abnormality detecting procedures according to the third embodiment.

## DETAILED DESCRIPTION OF THE PREFERRED EMBODIMENTS

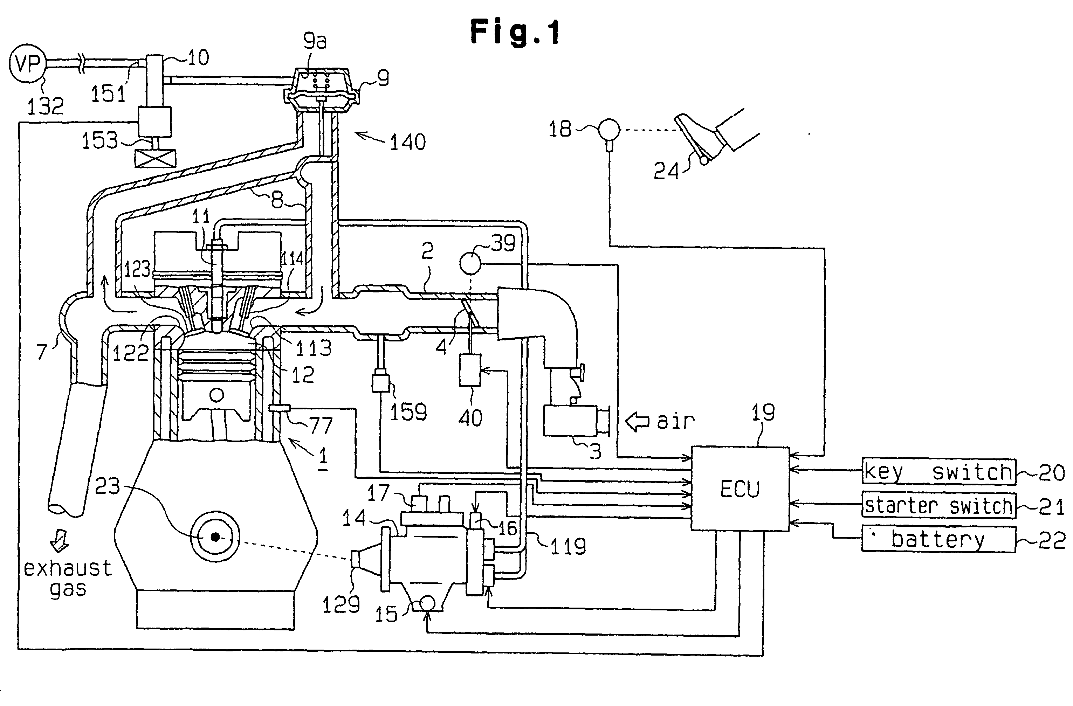

An intake throttle valve control apparatus according to a first embodiment of the present invention will now be described with reference to Figures 1 through 8. As shown in Figure 1, a diesel engine 1 has a plurality of cylinders each including a combustion chamber 12. In the suction stroke of the engine 1, an intake valve 114 opens an intake port 113. As a result, outside air (intake air) taken into an air-intake passage 2 via an air cleaner 3 is supplied into each combustion chamber 12. A fuel injection pump 14 supplies fuel to each injection nozzle 11 under pressure via a fuel line 119. The injection nozzle 11 injects the fuel into the associated combustion chamber 12. In the exhaust stroke of the engine 1, an exhaust valve 123 opens an exhaust port 122 to discharge the exhaust gas through an exhaust passage 7.

An intake throttle valve 4 is located midway in the air-intake passage 2 to adjust the amount of intake air to be supplied to the combustion chamber 12. A stepping motor 40 actuates the throttle valve 4 to set the angle of the throttle valve 4 to a desired value, based on a control signal from an electronic control unit (ECU) 19. A fully open switch 39 goes on when the throttle valve 4 is fully open or in the vicinity of the fully open position, and the switch 39 goes off when the throttle valve 4 is at any other position.

An exhaust gas recirculation (EGR) apparatus 140 recirculates part of the exhaust gas, which is discharged from each combustion chamber 12 to the exhaust passage 7, into the air-intake passage 2 to return the gas to the combustion chamber 12. The EGR apparatus 140 has an EGR passage 8, which permits part of the exhaust gas to flow into the air-intake passage 2 from the exhaust passage 7, and an EGR valve 9, which regulates the amount of the exhaust gas flowing in the EGR passage 8 (EGR amount).

The EGR valve 9 is a diaphragm type valve that adjusts the degree of opening of the EGR passage 8 by using negative pressure and atmospheric pressure. The EGR apparatus 140 further includes an actuator 10 for adjusting the pressure of a pressure chamber 9a of the EGR valve 9. This actuator 10 is comprised of, for example, an electric vacuum regulating valve. The actuator 10 is connected to a pump 132, via a negative pressure port 151, and to an atmospheric port 153, which is open to the outside air. The actuator 10 regulates the pressure of the pressure chamber 9a based on the supplied negative pressure and atmospheric pressure. The actuator 10 is controlled by the ECU 19. The ECU 19 controls the actuator 10 in accordance with the running condition of the engine 1 to adjust the angle of the EGR valve 9, thereby continuously regulating the EGR amount.

As the amount of the intake air is adjusted by the throttle valve 4 and the EGR amount is adjusted by the EGR valve 9, the ratio of the EGR amount to the amount of air supplied to the combustion chamber 12, or the EGR ratio, can be set freely. This ensures proper EGR control over the entire operational range of the diesel engine 1.

A crankshaft 23 of the engine 1 rotates a drive shaft 129 of the injection pump 14. The injection pump 14 has a timer control valve 15 and a spill valve 16 for respectively adjusting the injection timing and the injection amount of fuel to be injected from the injection nozzle 11. The timer control valve 15 and the spill valve 16 are controlled by the ECU 19.

An engine speed sensor 17 in the injection pump 14 detects the engine speed NE by detecting the rotational speed of the drive shaft 129, which rotates in synchronism with the crankshaft 23. The rotor (not shown) on the drive shaft 129 has multiple projections formed on its outer surface. The engine speed sensor 17 is an electromagnetic pickup, which detects the projections and sends out a pulse signal corresponding to the rotational speed of the drive shaft 129 to the ECU 19.

A coolant temperature sensor 77 provided in the engine 1 detects the temperature THW of the coolant and sends an electric signal corresponding to this coolant temperature THW to the ECU 19. An intake pressure sensor 159 provided in the air-intake passage 2 detects the pressure PM of the intake air in the air-intake passage 2 and sends an electric signal corresponding to the intake pressure PM to the ECU 19. An acceleration sensor 18 provided near an acceleration pedal 24 detects the degree of depression of the acceleration pedal 24, or an accelerator pedal angle ACCP, and sends an electric signal corresponding to the accelerator pedal angle ACCP to the ECU 19.

A key switch 20 and a starter switch 21 are connected to the ECU 19. The key switch 20 is turned on to activate the engine 1 and is turned off to stop the engine 1. The starter switch 21 is switched on when a starter motor (not shown) for starting the engine 1 is running, and is off when the starter motor is stopped. The ON/OFF statuses of those switches 20 and 21 are input to the ECU 19. A battery 22 supplies power to various electric devices including the ECU 19 and the stepping motor 40. The ECU 19 also receives information about the voltage VB of the battery 22.

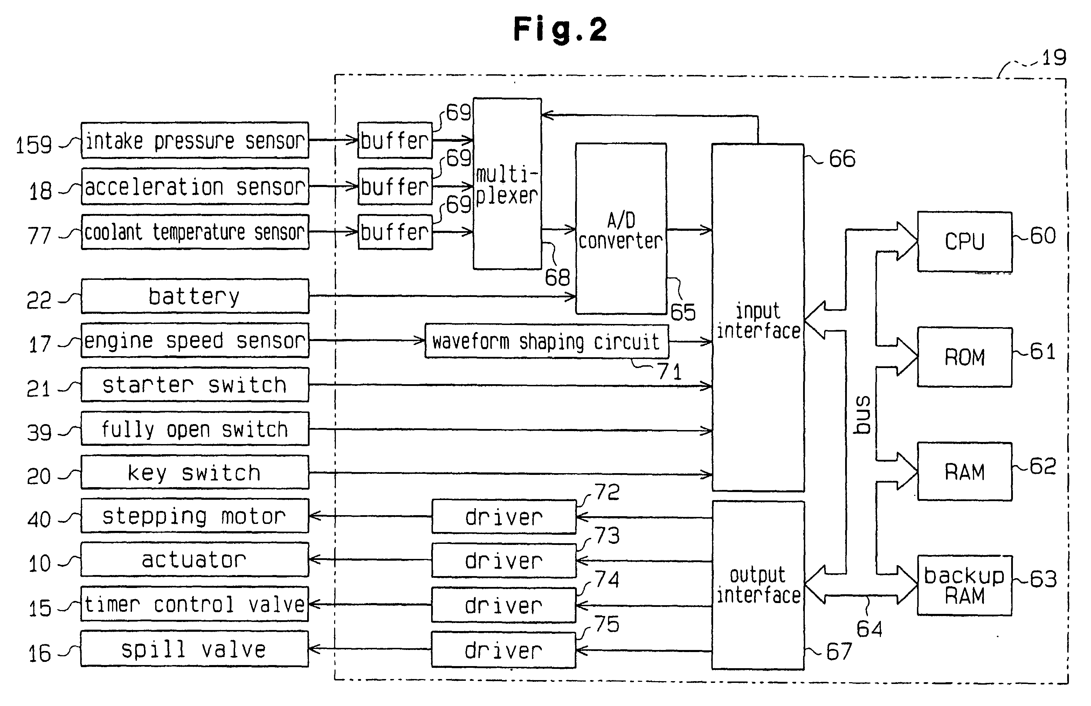

The electric structure of the diesel engine 1 will now be discussed referring to the block diagram of Figure 2. The ECU 19 has a read only memory (ROM) 61 where various control programs for fuel injection control, fuel injection timing control, EGR control, intake air amount control and so forth of the engine 1 and function data for computing values corresponding to various conditions are stored. The ECU 19 further includes a central processing unit (CPU) 60, a random access memory (RAM) 62 and a backup RAM 63. The CPU 60 executes arithmetic operations based on the programs stored in the ROM 61. The RAM 62 temporarily stores the operation results provided by the CPU 60 and data input from various sensors and the like. The backup RAM 63 retains necessary data when power supply to the ECU 19 is inhibited. The CPU 60, ROM 61, RAM 62 and backup RAM 63 are connected to an input interface 66 and an output interface 67 by a bus 64.

The output signals of the intake pressure sensor 159, acceleration sensor 18 and coolant temperature sensor 77 are temporarily stored in respective buffers 69. The signals stored in the individual buffers 69 are sequentially selected by a multiplexer 68 based on commands from the CPU 60, are converted to digital signals by an A/D converter 65 and are then sent to the input interface 66. The pulse signal from the engine speed sensor 17 is binarized by a waveform shaping circuit 71 and is then sent to the input interface 66. The ON/OFF signals from the key switch 20, starter switch 21 and fully open switch 39 are input to the input interface 66. Further, information about the voltage VB of the battery 22 is sent to the input interface 66 via the A/D converter 65.

Drivers 72, 73, 74 and 75 connected to the output interface 67 are supplied with instruction signals from the CPU 60. Based on the instruction signals from the CPU 60, the individual drivers 72-75 respectively drive the stepping motor 40, actuator 10, timer control valve 15 and spill valve 16.

The stepping motor 40 is driven by the pulse signal given by the driver 72. The greater the frequency of the pulse signal supplied to the stepping motor 40 is, the faster the drive speeds of the stepping motor 40 and the throttle valve 4, which is driven by the motor 40 become. The frequency of the pulse signal is expressed by the number of pulses per second or a pulse rate PPS (Pulse Per Second). That is, the greater the value of the pulse rate is, the faster the drive speeds of the stepping motor 40 and the throttle valve 4 become.

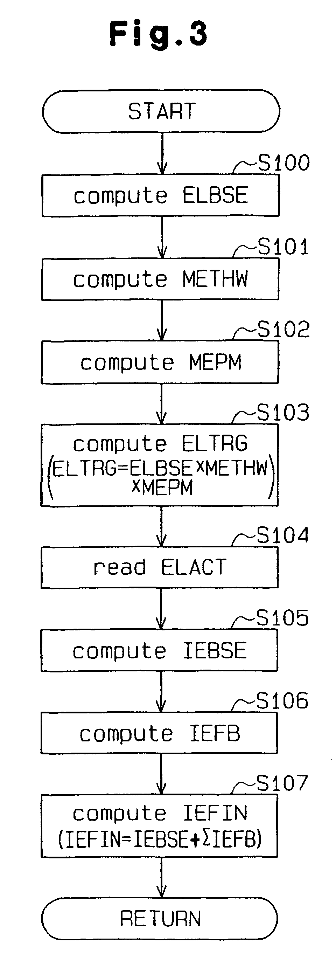

The EGR control will now be described specifically. Figure 3 presents a flowchart illustrating individual processes of an "EGR control routine". This routine is executed by the ECU 19 as an interruption process every 8 ms, for example.

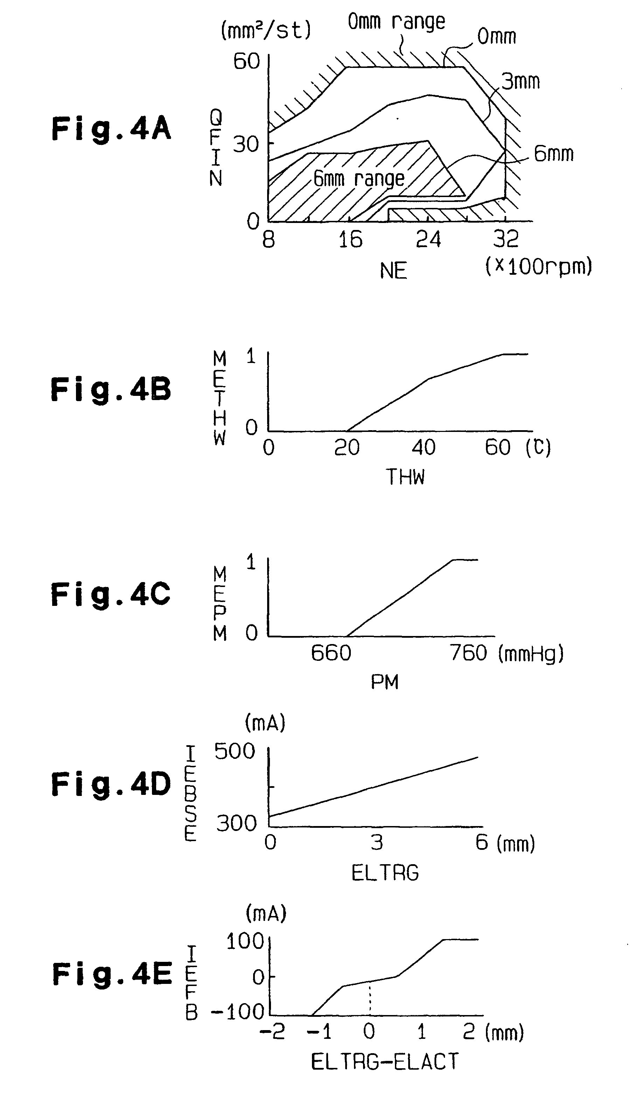

When the process by the ECU 19 enters this routine, the ECU 19 first calculates a base target lift amount ELBSE based on the engine speed NE and the fuel injection amount QFIN in step 100. The base target lift amount ELBSE is a reference value for the EGR lift amount. As shown in Figure 4A, function data that defines the relationship among the engine speed NE, the fuel injection amount QFIN and the base target lift amount ELBSE is stored in the ROM 61 of the ECU 19. The ECU 19 refers to this function data at the time of computing the base target lift amount ELBSE.

The base target lift amount ELBSE at a point on the two-dimensional plane of the graph in Figure 4A, which is defined by the engine speed NE and the fuel injection amount QFIN, takes a value continuously varying over a range from 0 mm to 6 mm. The unit "mm$^3$/st" of the fuel injection amount QFIN shown in Figure 4A are units of fuel injection amount per stroke of a piston.

The engine speed NE is acquired based on the pulse signal output from the engine speed sensor 17. The fuel injection amount QFIN is obtained from, for example, an equation (1) below, based on a plurality of parameters representing the running condition of the engine 1, including the engine speed NE, the accelerator pedal angle ACCP, the intake pressure PM and the coolant temperature THW.

$$QFIN = \min\{f(NE,ACCP),g(NE,PM,THW)\} \quad (1)$$

where "f" is a function with the engine speed NE and the accelerator pedal angle ACCP as parameters, "g" is a function with the engine speed NE, the intake pressure PM and the coolant temperature THW as parameters, and "min" is a function which takes either a value obtained by the function "f" or a value obtained by the function "g", whichever is smaller. The function data is stored in the ROM 61 .

In the next step 101, the ECU 19 computes a coolant temperature compensation coefficient METHW based on the coolant temperature THW. The ROM 61 retains function data that defines the relationship between the coolant temperature THW and the coolant temperature compensation coefficient METHW as shown in Figure 4B. The ECU 19 refers to this function data when computing the coolant temperature compensation coefficient METHW. As illustrated in Figure 4B,

the coolant temperature compensation coefficient METHW takes a value over a range from, for example, 0 to 1, as the coolant temperature THW changes. The coolant temperature THW is obtained based on the signal output from the coolant temperature sensor 77.

In step 102, the ECU 19 calculates an intake pressure compensation coefficient MEPM based on the intake pressure PM. The ROM 61 retains function data that defines the relationship between the intake pressure PM and the intake pressure compensation coefficient MEPM as shown in Figure 4C. The ECU 19 refers to this function data when computing the intake pressure compensation coefficient MEPM. As illustrated in Figure 4C, the intake pressure compensation coefficient MEPM takes a value over a range from, for example, 0 to 1, as the intake pressure PM varies. The intake pressure PM is obtained based on the signal output from the intake pressure sensor 159.

In step 103, the ECU 19 computes a final target lift amount ELTRG using the base target lift amount ELBSE, the coolant temperature compensation coefficient METHW and the intake pressure compensation coefficient MEPM. The final target lift amount ELTRG is calculated by an equation (2) below.

$$ELTRG = ELBSE \times METHW \times MEPM \quad (2)$$

In the next step 104, the ECU 19 reads an actual lift amount ELACT of the EGR valve 9 based on a detection signal from a lift sensor (not shown).

Then, the ECU 19 calculates a base control amount IEBSE based on the final target lift amount ELTRG in step 105. The ROM 61 retains function data that defines the relationship between the final target lift amount ELTRG and the base control amount IEBSE as shown in Figure 4D. The ECU 19 refers to this function data when computing the base control amount IEBSE. As illustrated in Figure 4D, the base control amount IEBSE takes a value over a range from, for example, 300 mA to 500 mA, as the final target lift amount ELTRG varies.

Next, the ECU 19 computes a feedback control amount IEFB based on the final target lift amount ELTRG and the actual lift amount ELACT in step 106. Stored in the ROM 61 is function data that defines the relationship between the difference between the actual lift amount ELACT and the final target lift amount ELTRG and the feedback control amount IEFB as shown in Figure 4E. The ECU 19 refers to this function data when computing the feedback control amount IEFB. As illustrated in Figure 4E, the feedback control amount IEFB takes a value over a range from, for example, -100 mA to 100 mA.

Next, the ECU 19 computes a final control amount IEFIN using the base control amount IEBSE and the feedback control amount IEFB in step 107. The final control amount IEFIN is computed by the following

equation (3).

$$IEFIN = IEBSE + \Sigma IEFB \qquad (3)$$

The ECU 19 controls the driver 73 in such a way that a current equivalent to the final control amount IEFIN obtained in this step 107 flows through the actuator 10 of the EGR valve 9. An EGR amount that is suitable for the current running condition of the engine 1 is acquired in this manner.

A detailed description of the intake air amount control will now be given. In implementing the intake air amount control, the target angle of the throttle valve 4 is computed. The angle of the throttle valve 4 corresponds to the number of steps (natural number) of the stepping motor 40 that drives the valve 4. In this embodiment, the number of steps is set to 0 when the throttle valve 4 is fully open, and is set to 230 when the valve 4 is fully closed. As the angle of the throttle valve 4 becomes smaller, or as the opening of the air-intake passage 2 determined by the throttle valve 4 decreases, the step number becomes larger. This relationship between the angle of the throttle valve 4 and the step number of the motor 40 is just one possible relationship, and numerous variations are possible to achieve the same result.

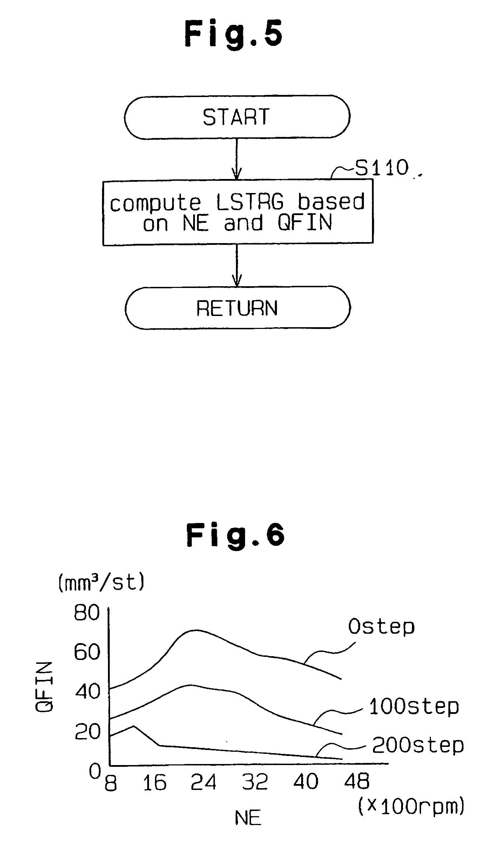

Figure 5 is a flowchart illustrating a "target step number computing routine" for computing the target step number of the stepping motor 40. This routine is executed by the ECU 19 as an interruption process every 8 ms, for example.

When the ECU 19 proceeds to this routine, the ECU 19 calculates a target step number LSTRG indicative of the target angle of the throttle valve 4, based on the engine speed NE and the fuel injection amount QFIN in step 110. The ROM 61 retains function data that defines the relationship among the engine speed NE, the fuel injection amount QFIN and the target step number LSTRG as shown in Figure 6. The ECU 19 refers to this function data when computing the target step number LSTRG.

The target step number LSTRG at a point on the two-dimensional plane of the graph in Figure 6, which is defined by the engine speed NE and the fuel injection amount QFIN, takes a value of a natural number over a range from 0 to 230. Although Figure 6 merely shows data associated with the target step numbers LSTRG of 0, 100 and 200 to illustrate the relationship, there is data on each of the target step numbers LSTRG of 0 to 230.

The ECU 19 controls the stepping motor 40 via the driver 72 so that the actual step number LSACT of the stepping motor 40 coincides with the target step number LSTRG. Consequently, the throttle valve 4 is actuated to the angle that corresponds to the target step number LSTRG, thus yielding the amount of intake air suitable for the current running condition of the engine 1.

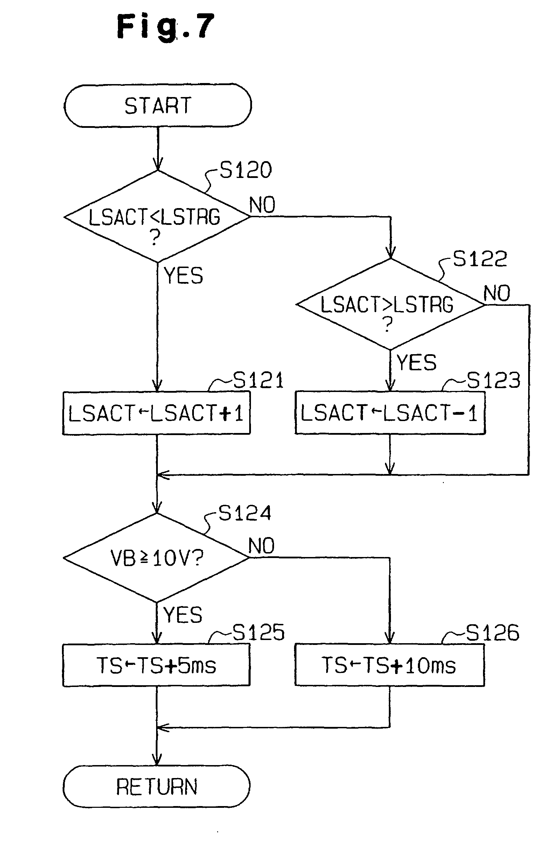

The ECU 19 executes an "actual step computing routine" illustrated in a flowchart in Figure 7 when controlling the stepping motor 40 to determine the actual step number LSACT of the stepping motor 40 or the angle of the throttle valve 4. This routine is executed by the ECU 19 as an interruption process at either 5 ms or 10 ms intervals, depending on the level of the voltage VB of the battery 22.

When the ECU 19 proceeds to this routine, the ECU 19 determines in step 120 if the currently known actual step number LSACT is smaller than the target step number LSTRG. When the actual step number LSACT is smaller than the target step number LSTRG, the stepping motor 40 is being currently controlled so that the actual step number LSACT approaches the target step number LSTRG. When the decision in step 120 is affirmative, therefore, the ECU 19 proceeds to step 121 to set the current actual step number LSACT incremented by 1 as a new actual step number LSACT.

When the decision in step 120 is negative, the ECU 19 determines in step 122 if the current actual step number LSACT is greater than the target step number LSTRG. When the actual step number LSACT is greater than the target step number LSTRG, the stepping motor 40 is being currently controlled so that the actual step number LSACT approaches the target step number LSTRG, as in the case where the actual step number LSACT is smaller than the target step number LSTRG. When the decision in step 122 is affirmative, therefore, the ECU 19 proceeds to step 123 to set the current actual step number LSACT minus 1 as a new actual step number LSACT.

After executing the process of step 121 or step 123, the ECU 19 goes to step 124. When the decision in step 122 is negative, or when the current actual step number LSACT is equal to the target step number LSTRG, the throttle valve 4 has reached the target angle, and the stepping motor 40 is stopped. Accordingly, the ECU 19 directly proceeds to step 124 without changing the current actual step number LSACT.

In step 124, the ECU 19 determines whether the battery voltage VB is equal to or higher than 10 V. When the battery voltage VB is equal to or higher than 10 V, the ECU 19 determines that the stepping motor 40 is operating normally and sets the current time TS plus 5 ms as the next interruption time TS for this routine. When the battery voltage VB is lower than 10 V, the ECU 19 determines that the operation of the stepping motor 40 is limited, and sets the current time TS plus 10 ms as the next interruption time TS for this routine. When the battery voltage VB drops, therefore, the interruption interval for this routine becomes longer.

According to this embodiment, as will be discussed later, when the battery voltage VB is equal to or higher than 10 V, which indicates that the stepping motor 40 can rotate with a sufficient drive torque without stepping out, the motor 40 is driven at a normal speed by a pulse signal having a pulse rate of 200 PPS. In this case, the motor 40 rotates forward step by step every 5 ms. With the interruption interval of the "actual step computing routine" in Figure 7 being 5 ms, when the battery voltage VB is equal to or higher than 10 V, the actual step number LSACT is incremented or decremented by 1 every 5 ms. It is therefore possible to accurately determine the actual step number LSACT of the stepping motor 40 or the angle of the throttle valve 4.

When the battery voltage VB is lower than 10 V, on the other hand, which means that the stepping motor 40 is likely to step out because of insufficient drive torque, the motor 40 is driven at a low speed by a pulse signal having a pulse rate of 100 PPS. The motor 40, therefore, is able to rotate with a sufficient drive torque without stepping out. In this case, the motor 40 rotates forward step by step every 10 ms. With the interruption interval of the "actual step computing routine" in Figure 7 being 10 ms, when the battery voltage VB is lower than 10 V, the actual step number LSACT is incremented or decremented by 1 every 10 ms. This also makes it possible to accurately determine the actual step number LSACT of the stepping motor 40 or the angle of the throttle valve 4.

According to this embodiment, as apparent from the above, when the battery voltage VB is equal to or higher than 10 V, there is no reason to interfere with the operation of the stepping motor 40, and the motor 40 is driven at the normal speed. When the battery voltage VB is lower than 10 V, on the other hand, there is a reason to interfere with the operation of the stepping motor 40, and the motor 40 is driven at a lower speed than the normal speed. In other words, when there is a reason to interfere with the operation of the stepping motor 40, the operation of the motor 40 is limited to avoid the interference.

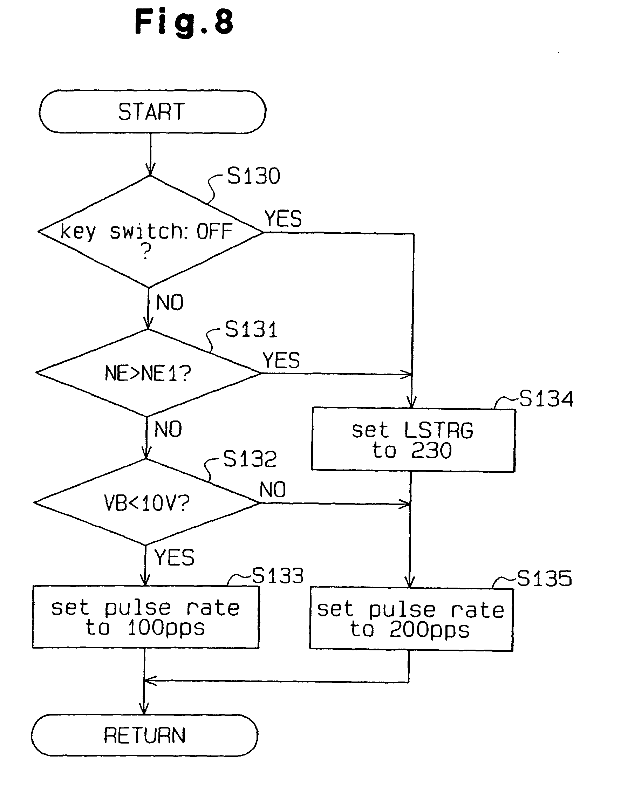

Further, according to this embodiment, the pulse rate of the pulse signal that is sent to the stepping motor 40 is changed in accordance with the running condition of the engine 1 and in accordance with the level of the battery voltage VB. Figure 8 is a flowchart showing a "pulse rate setting routine". This routine is executed by the ECU 19 as an interruption process every 8 ms, for example.

When the ECU 19 enters this routine, the ECU 19 determines in step 130 if the key switch 20 is off. When the key switch 20 is on, i.e., when the engine 1 is running, the ECU 19 goes to step 131.

In step 131, the ECU 19 determines if the engine speed NE is greater than a predetermined value NE1 (e.g., 5500 rpm). When the decision is negative, the ECU 19 determines that the engine speed NE is within an allowable range and moves to step 132.

In step 132, the ECU 19 determines whether or not the battery voltage VB is lower than 10 V. When the decision is negative, i.e., when the battery voltage VB is equal to or higher than 10 V, the ECU 19 proceeds to step 135 to set the pulse rate to 200 PPS. That is, when the engine is running at an allowable rotational speed and when the battery voltage VB is high enough not to interfere with the operation of the stepping motor 40, the motor 40 is driven at the normal speed.

When the decision in step 132 is affirmative or when the battery voltage VB is lower than 10 V, the ECU 19 goes to step 133 to set the pulse rate to 100 PPS. In other words, when the stepping motor 40 is likely to step out due to the dropped battery voltage VB, even though the engine 1 is running at an allowable rotational speed, the motor 40 is driven at a lower speed than the normal speed in order to avoid the step-out.

When the key switch 20 is off or some manipulation to stop the engine 1 is carried out in step 130, the ECU 19 proceeds to step 134. When the decision in the step 131 is affirmative, the ECU 19 determines that the engine speed NE is beyond the allowable range and the engine 1 is not running properly, and the ECU 19 proceeds to step 134.

In step 134, the ECU 19 sets the target step number LSTRG of the stepping motor 40 to 230 corresponding to the fully closed position of the throttle valve 4 in order to block the air flow to the combustion chamber 12. In the next step 135, the ECU 19 sets the pulse rate to 200 PPS to drive the stepping motor 40 at the normal speed, regardless of the level of the battery voltage VB.

Specifically, when the key switch 20 is set off or when the engine 1 is not running properly, the ECU 19 controls the stepping motor 40 in such a way as to forcefully actuate the throttle valve 4 to the fully closed position in order to stop the engine 1. In this case, the ECU 19 controls the stepping motor 40 at the normal speed so that the throttle valve 4 is rapidly moved to the fully closed position.

As apparent from the above, when it becomes necessary to stop the engine 1, the stepping motor 40 is driven at the normal speed, not the low speed, even if the battery voltage VB is lower than 10 V. In other words, when there is a necessity to stop the engine 1, prompt stopping of the engine 1 has a higher priority than prevention of stepping-out of the stepping motor 40. When the key switch 20 is turned off or when the engine 1 is not running properly, therefore, the throttle valve 4 is fully closed immediately to quickly stop the engine 1. As the air flow to the combustion chamber 12 is swiftly blocked by the throttle valve 4, vibration that may occur when the engine 1 stops is suppressed.

If the battery voltage VB is lower than 10 V, which means the stepping motor 40 is likely to step out, and the motor 40 is driven at the normal speed, nothing significant would occur when the throttle valve 4 is fully closed. That is, when the throttle valve 4 reaches the fully closed position, the throttle valve 4 does not move beyond that position. When the throttle valve 4 reaches the fully closed position and is held at that position, the ECU 19 can easily determine the step number of the stepping motor 40 corresponding to the fully closed position. Even if the stepping motor 40 steps out while the throttle valve 4 is driven to the fully closed position, no problems arise as long as the throttle valve 4 reaches the fully closed position.

Although two types of pulse rates, 100 PPS and 200 PPS, are used in this embodiment, the pulse rate may be set greater than 200 PPS, the normal value, when the throttle valve 4 is driven to the fully closed position. Further, the pulse rate may be changed as needed.

In this embodiment, when it is determined in step 130 that the key switch 20 is off or when it is determined in step 131 that the engine 1 is not running properly, it is determined that the engine 1 is in a predetermined state and the throttle valve 4 is driven to the fully closed position. However, the conditions for determining if the engine 1 is in the predetermined state are not limited to those in steps 130 and 131.

Although the throttle valve 4 is driven to the fully closed position when the engine 1 is determined to be in the predetermined state in this embodiment, the throttle valve 4 may be driven to a predetermined open position other than the fully closed position, for example, an open position near the fully closed position.

Further, the condition for determining that the motor 40 is likely to step-out is not limited to the level of the battery voltage VB. For instance, it is possible to judge whether the motor 40 is susceptible to interference based on the heat generated by the motor 40. Furthermore, the value of the battery voltage VB, which is used to determine whether or not to change the pulse rate, is in not limited to 10 V.

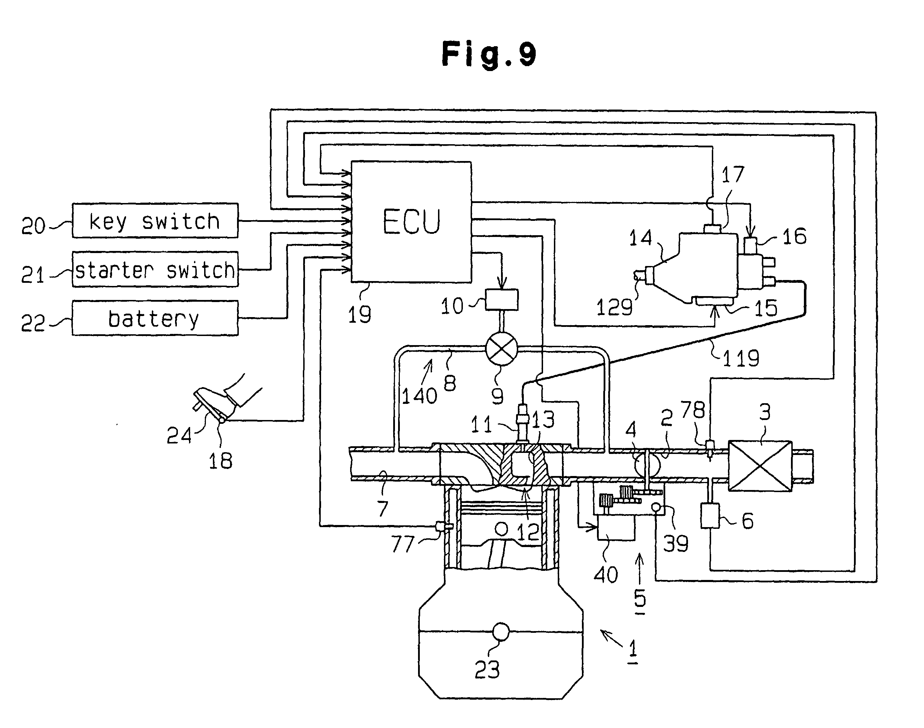

A second embodiment of the present invention will now be described with reference to Figures 9 through 20. Like or same reference numerals are given to those components which are the same as the corresponding components of the first embodiment, and the following description of the second embodiment will center on the differences from the first embodiment.

Figure 9 is a schematic structural diagram of a diesel engine 1 equipped with a throttle valve control apparatus according to this embodiment. Since the mechanical structure of the engine 1 according to this embodiment is similar to the engine 1 of the first embodiment shown in Figure 1, only the differences from the first embodiment will be discussed below.

As shown in Figure 9, each combustion chamber 12 has a sub combustion chamber 13 at its upper portion. The injection nozzle 11 injects fuel toward the sub combustion chamber 13. Provided in the air-intake passage 2 is a pressure sensor 6 for detecting the pressure of air (atmospheric pressure) upstream of the throttle valve 4, in place of the intake pressure sensor 159 of the first embodiment- A temperature sensor 78 is provided in the air-intake passage 2 at a position corresponding to the pressure sensor 6. The temperature sensor 78 detects the temperature of the air upstream of the throttle valve 4. A valve driving mechanism 5 having a plurality of gears couples the stepping motor 40 to the throttle valve 4 so that the stepping motor 40 can operate the valve 4.

As the engine 1 of this embodiment has substantially the same electric structure as the engine 1 of the first embodiment shown in Figure 2, only the differences from the first embodiment will be discussed below referring to Figure 2. The pressure sensor 6, which takes a place of the intake pressure sensor 159 of the first embodiment, sends out an electric signal corresponding to the detected atmospheric pressure to the buffer 69. The temperature sensor 78 sends out an electric signal corresponding to the detected temperature via the associated buffer (not shown) to the multiplexer 68.

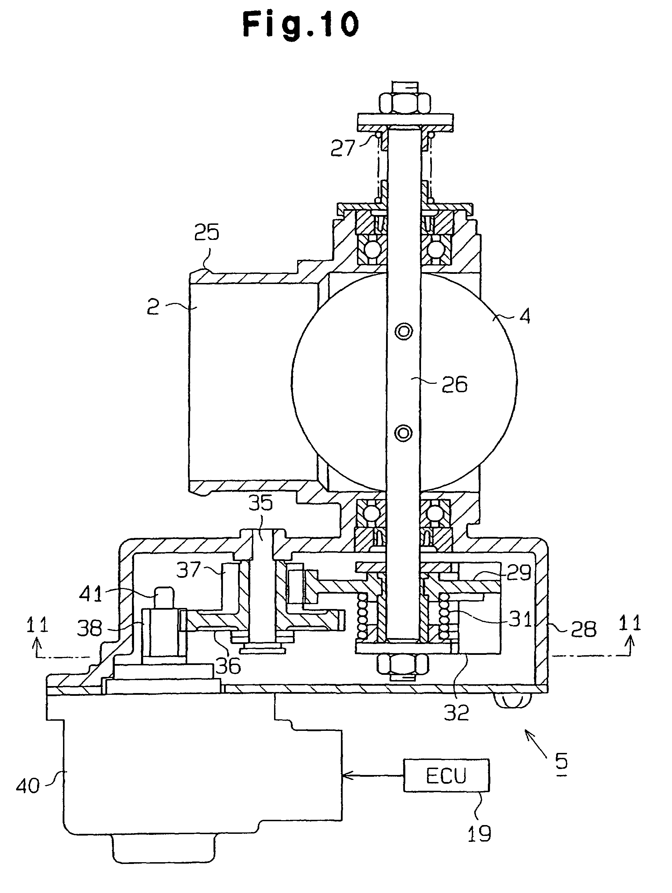

The valve driving mechanism 5 will now be explained in detail with reference to Figures 10 to 12. As shown in Figure 10, the throttle valve 4 is secured to a valve shaft 26 so that the valve 4 rotates with the shaft 26. The valve shaft 26 is rotatably supported on a throttle body 25 connected to the air-intake passage 2. One end of the valve shaft 26 (the upper end in Figure 10) is coupled to the throttle body 25 via a return spring 27. The valve shaft 26 is urged by the force of the return spring 27 in a direction to open the throttle valve 4.

A gear box 28 is attached to the throttle body 25. The other end of the valve shaft 26 (the lower end in Figure 10) extends into the gear box 28, with the driven gear 29 fixed to the valve shaft 26. A first intermediate gear 36 and a second intermediate gear 37, integrally formed, are rotatably supported on a support shaft 35 in the gear box 28. The driven gear 29 engages with the second intermediate gear 37. Attached to the gear box 28 is the stepping motor 40, the drive shaft 41 of which extends inside the gear box 28. A drive gear 38, which is secured to the drive shaft 41, engages with the first intermediate gear 36. The rotation of the drive shaft 41 of the stepping motor 40 is transmitted to the valve shaft 26 via the drive gear 38, the first intermediate gear 36, the second intermediate gear 37 and the driven gear 29. As the valve shaft 26 rotates, the throttle valve 4 is opened or closed.

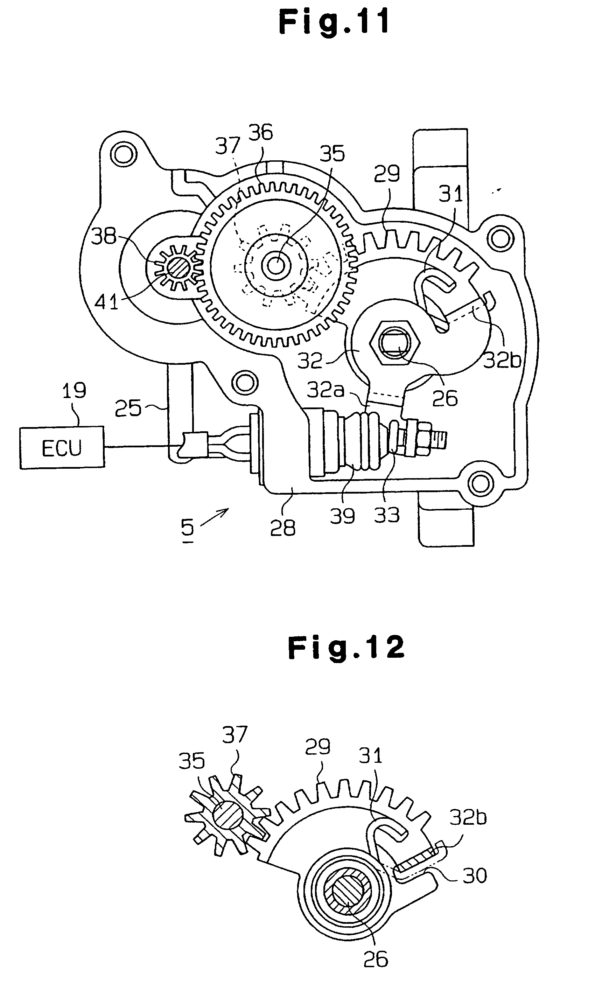

Rotatably attached to the valve shaft 26 is a lever 32 that has two arms 32a and 32b as shown in Figure 11. This lever 32 is coupled via a relief spring 31 to the driven gear 29. The relief spring 31 urges the lever 32 counterclockwise in Figure 11 with respect to the driven gear 29. The arm 32b is bent to extend toward the driven gear 29. The free end of the arm 32b engages with a groove 30 formed in the driven gear 29. The lever 32 is rotatable with respect to the driven gear 29 within a range determined by a clearance between the groove 30 and the free end of the arm 32b. Note that the free end of the arm 32b normally abuts against one side wall of the groove 30 due to the counterclockwise urging force of the relief spring 31. Consequently, the driven gear 29 and the lever 32 rotate together.

As shown in Figure 11, the free end of the other arm 32a is provided with a pressing portion 33 which is engagable with the aforementioned fully open switch 39 provided in the gear box 28. This pressing portion 33 abuts against the fully open switch 39 to turn the switch 39 on at the fully open position of the throttle valve 4. According to this embodiment, the throttle valve 4 can further rotate in the opening direction from the fully open position. The "fully open position" is the angle position of the throttle valve 4 that maximizes the open area of the air-intake passage 2. As the throttle valve 4 is driven further in the opening direction from the fully open position, further opening will be inhibited by an unillustrated stopper. The angle position of the throttle valve 4 at this time is called the maximum angle position.

An unillustrated fully closed stopper is provided in the gear box 28. This fully closed stopper abuts on the lever 32 at the fully closed position of the throttle valve 4 to inhibit the rotation of the lever 32 in the closing direction of the throttle valve 4. The "fully closed position" is the angle position of the throttle valve 4 that minimizes the open area of the air-intake passage 2, or makes the open area zero. Note that the driven gear 29 can further rotate in the closing direction from the fully closed position of the throttle valve 4. When the driven gear 29 further rotates in the closing direction from the state at which the rotation of the lever 32 is prohibited, the driven gear 29 is urged in the opening direction of the throttle valve 4 by the relief spring 31.

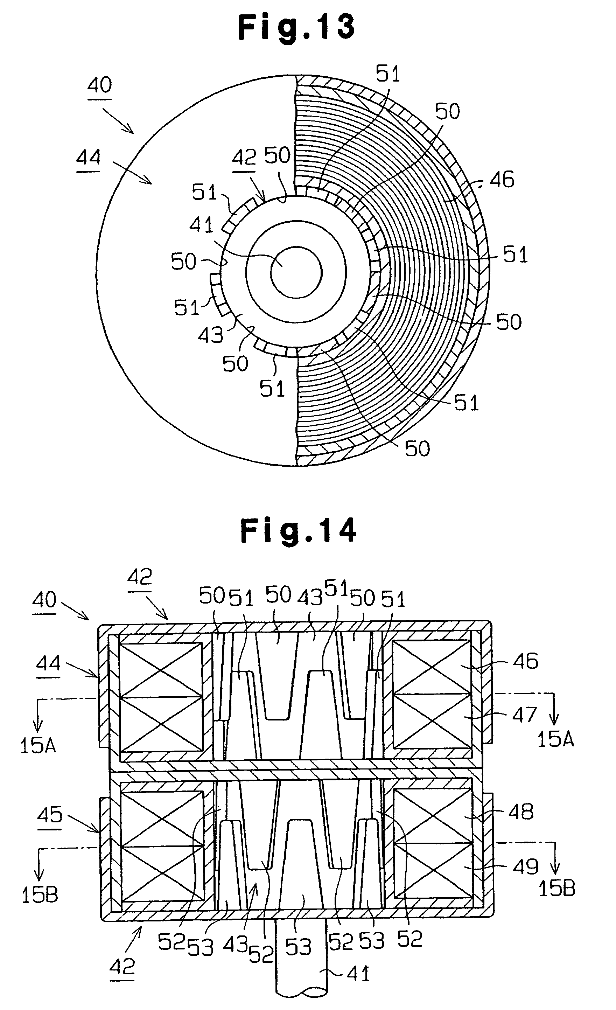

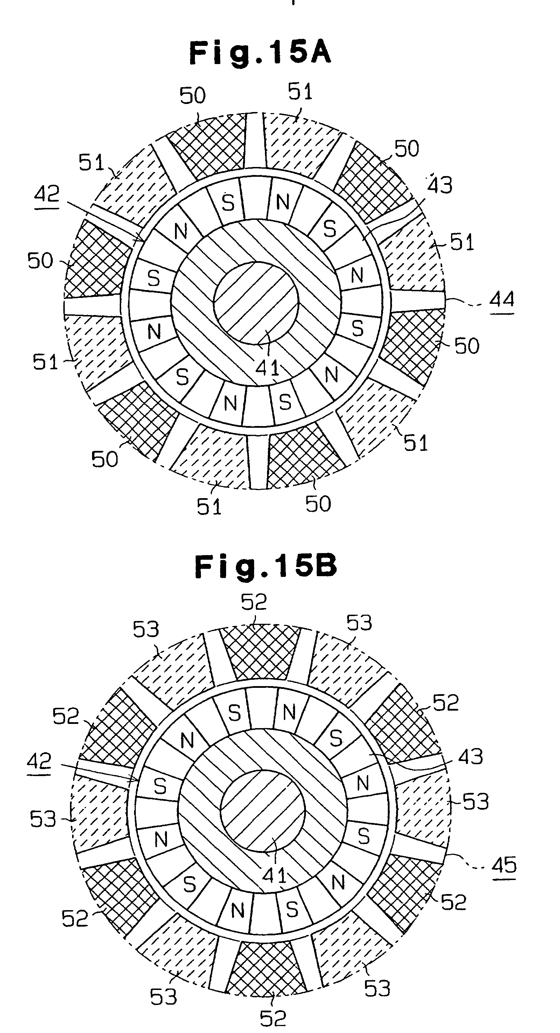

The structure and control of the stepping motor 40 will now be described with reference to Figures 13 through 17. Figure 13 shows the planar cross-sectional structure of the stepping motor 40, and Figure 14 shows the side cross-sectional structure of the motor 40. As illustrated in those diagrams, the stepping motor 40 has a rotor 42 rotatable together with the drive shaft 41, and two stator cups, namely an A-phase stator cup 44 and a B-phase stator cup 45, which surround the rotor 42. The rotor 42 has a permanent magnet 43 at its outer surface portion. This permanent magnet 43 has N poles and S poles alternately arranged at predetermined angle intervals in the rotational direction as shown in Figures 15A and 15B.

As shown in Figures 13 and 14, the A-phase stator cup 44 and the B-phase stator cup 45 have ring-like shapes, with the rotor 42 rotatably retained in the hollow portions. Two coils, an AP-phase coil 46 and an AN-phase coil 47, are provided around the rotor 42 in the A-phase stator cup 44. Likewise, two coils, a BP-phase coil 48 and a BN-phase coil 49, are provided around the rotor 42 in the B-phase stator cup 45. The coils 46-49 are wound in the same direction.

The A-phase stator cup 44 has a plurality of upper teeth 50 and a plurality of lower teeth 51 provided around the rotor 42. As shown in Figure 15A, the upper teeth 50 and lower teeth 51 are alternately arranged at the same angular intervals that are between N and S poles of the permanent magnet 43 in the rotational direction of the rotor 42. Likewise, the B-phase stator cup 45 has a plurality of upper teeth 52 and a plurality of lower teeth 53 provided around the rotor 42. As shown in Figure 15B, the upper teeth 52 and lower teeth 53 are alternately arranged at the same angle intervals that are between N and S poles of the permanent magnet 43 in the rotational direction of the rotor 42. The teeth 50 and 51 provided on the A-phase stator cup 44 are shifted by a half the interval between the teeth from the teeth 52 and 53 provided on the B-phase stator cup 45. The upper teeth 50 and 52 and the lower teeth 51 and 53 are excited when a voltage is applied to the coils 46-49.

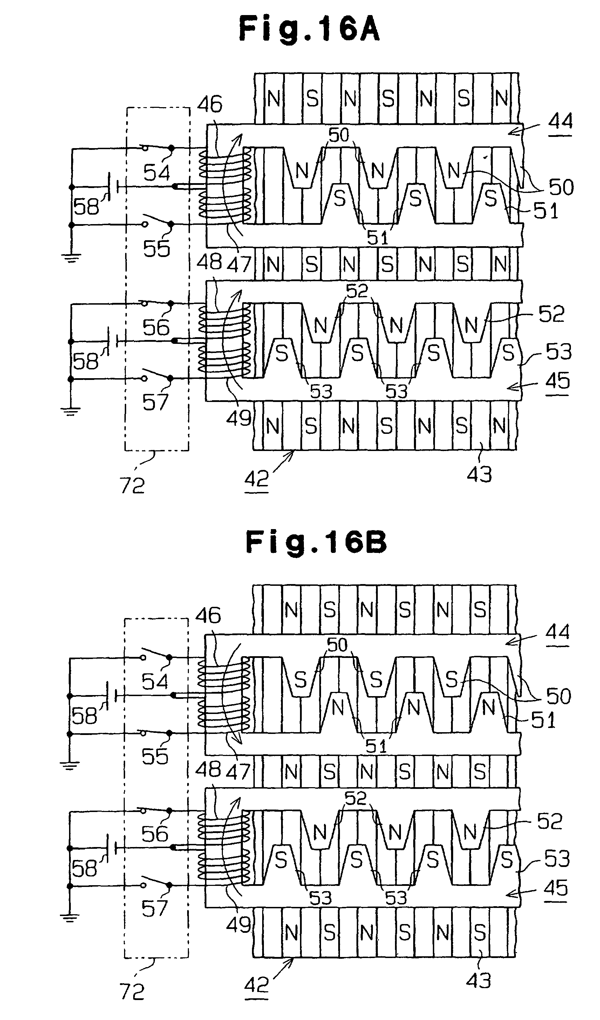

The electric structures of the stepping motor 40 and the driver 72 for driving the motor 40 will now be discussed referring to Figures 16A and 16B. Figures 16A and 16B illustrate the rotor 42 and the stator cups 44 and 45 of the stepping motor 40 in a planarly developed form. Those figures also schematically show the electric structure of the driver 72 for illustrating the function of the driver 72.

Voltages from a DC power supply 58, which uses the power of a battery 22, are applied to the AP-phase coil 46 and the AN-phase coil 47 in the A-phase stator cup 44. The driver 72 has an AP-phase coil switch 54 and an AN-phase coil switch 55 to permit or block application of voltages to the respective coils 46 and 47. The driver 72 operates in response to an instruction signal from the ECU 19. When the coil switches 54 and 55 are set on, voltages are applied to the associated coils 46 and 47, thereby exciting the upper teeth 50 and the lower teeth 51. While the coils 46 and 47 are wound in the same direction as mentioned earlier, the directions of the currents that are supplied to the coils 46 and 47 are in the opposite directions, as shown in Figures 16A and 16B. Therefore, the polarities to which the upper teeth 50 and the lower teeth 51 are excited when a voltage is applied to the AP-phase coil 46 differ from those when a voltage is applied to the AN-phase coil 47. Specifically, when a voltage is applied to the AP-phase coil 46, the upper teeth 50 are excited to N polarity and the lower teeth 51 to S polarity as shown in Figure 16A, whereas when a voltage is applied to the AN-phase coil 47, the upper teeth 50 are excited to S polarity and the lower teeth 51 to N polarity as shown in Figure 16B.

The B-phase stator cup 45 has an electric structure similar to that of the A-phase stator cup 44. Switching on or off a BP-phase coil switch 56 and a BN-phase coil switch 57 selectively permits or blocks application of voltages to the associated coils 48 and 49. As a voltage is applied to the BP-phase coil 48, the upper teeth 52 are excited to N polarity and the lower teeth 53 to S polarity. As a voltage is applied to the BN-phase coil 49, the upper teeth 52 are excited to S polarity and the lower teeth 53 to N polarity.

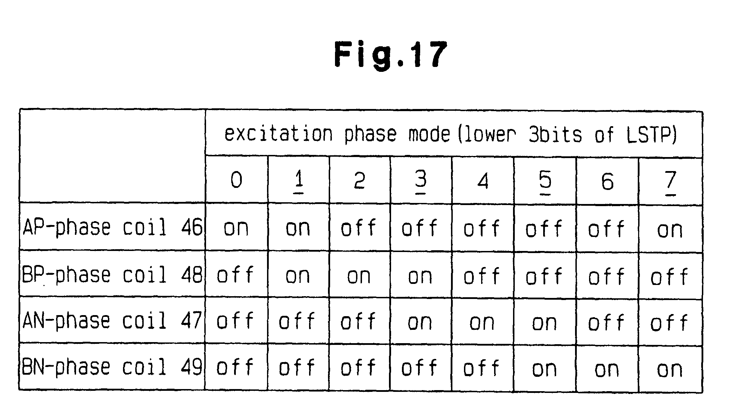

A description will now be given of the operational principle of the stepping motor 40, which is driven by the driver 72, with reference to Figures 16A, 16B and 17. The driver 72 applies voltages to the coils 46-49 of the stepping motor 40 in the modes illustrated in Figure 17. As shown in Figure 17, the driver 72 switches among eight excitation phase modes "0" to "7" to rotate the stepping motor 40. As shown in the diagram, in the odd excitation phase modes "1", "3", "5" and "7", the driver 72 applies voltages to one of the paired coils 46 and 47 of the A-phase stator cup 44 and one of the paired coils 48 and 49 of the B-phase stator cup 45. In the even excitation phase modes "0", "2", "4" and "6", the driver 72 applies a voltage to just one of the four coils 46 to 49 of the stator cups 44 and 45.

Figure 16A shows the statuses of the driver 72 and the stepping motor 40 when the excitation phase mode of Figure 17 is "1". As shown in Figure 16A, when the excitation phase mode is "1", the driver 72 closes the AP-phase coil switch 54 and the BP-phase coil switch 56 to apply voltages to the AP-phase coil 46 and the BP-phase coil 48. In the A-phase stator cup 44, when the voltage is applied to the AP-phase coil 46, the upper teeth 50 are excited to N polarity and the lower teeth 51 to S polarity. In the B-phase stator cup 45, when the voltage is applied to the BP-phase coil 48, the upper teeth 52 are excited to N polarity and the lower teeth 53 to S polarity.

At this time, S poles of the permanent magnet 43 of the rotor 42 are attracted by the upper teeth 50 of the A-phase stator cup 44 and the upper teeth 52 of the B-phase stator cup 45, both magnetized to N polarity, and are pulled to points midway between adjacent upper teeth 50 and adjacent upper teeth 52- Likewise, N poles of the permanent magnet 43 are attracted by the lower teeth 51 of the A-phase stator cup 44 and the lower teeth 53 of the B-phase stator cup 45, both magnetized to S polarity, and are pulled to points midway between adjacent lower teeth 51 and adjacent lower teeth 53. The rotor 42 is therefore rotated in such a way that S poles of the permanent magnet 43 come to points midway between adjacent upper teeth 50 and 52 and N poles of the permanent magnet 43 come to points midway between adjacent lower teeth 51 and 53.

When the excitation phase mode is changed to "3" from "1" thereafter, the driver 72 operates in such a way as to apply voltages to the AN-phase coil 47 and the BP-phase coil 48 as shown in Figure 17. When the excitation phase mode becomes "3", as shown in Figure 16B, the upper teeth 50 of the A-phase stator cup 44 are excited to S polarity and the lower teeth 51 to N polarity. The upper teeth 52 of the B-phase stator cup 45 are excited to N polarity and the lower teeth 53 to S polarity. Therefore, S poles of the permanent magnet 43 are pulled to points midway between adjacent lower teeth 51 of the A-phase stator cup 44 and adjacent upper teeth 52 of the B-phase stator cup 45, both magnetized to N polarity. N poles of the permanent magnet 43 are pulled to points midway between adjacent upper teeth 50 of the A-phase stator cup 44 and adjacent lower teeth 53 of the B-phase stator cup 45, both magnetized to S polarity.

When the excitation phase mode changes to "3" from "1", the rotor 42 rotates rightward in Figures 16A and 16B by a half the interval of the adjoining poles of the permanent magnet 43. According to this embodiment, when the rotor 42 and drive shaft 41 of the motor 40 rotate rightward in Figures 16A and 16B, the throttle valve 4 is driven in the closing direction. When the rotor 42 and drive shaft 41 rotate leftward in Figures 16A and 16B, the throttle valve 4 is driven in the opening direction.

As apparent from the above, the driver 72 switches the excitation phase mode to rotate the drive shaft 41 of the stepping motor 40 to thereby actuate the throttle valve 4. When the excitation phase mode is switched in a descending order, the throttle valve 4 is actuated in the opening direction, whereas when the excitation phase mode is switched in an ascending order, the throttle valve 4 is actuated in the closing direction.

According to this embodiment, the stepping motor 40 is controlled by two kinds of excitation systems called "1-2 phase excitation system" and "2 phase excitation system". In the 1-2 phase excitation system, the aforementioned excitation phase modes "0" to "7" are switched one after another, specifically, in the order of, for example, "0" to "1" to "2" and so forth or in the order of, for example, "2" to "1" to "0" and so forth. In the 1-2 phase excitation system, therefore, the mode where only one coil is excited and the mode where two coils are excited simultaneously are alternately repeated as has been explained earlier with reference to Figure 17. In the 2 phase excitation system, on the other hand, every other excitation phase mode is selected so that only the odd excitation phase modes are executed. Specifically, the excitation phase mode is changed in the order of, for example, "1" to "3" to "5" and so forth or in the order of, for example, "5" to "3" to "1" and so forth. In this 2 phase excitation system, only the mode where two coils are excited simultaneously is carried out.

In the 1-2 phase excitation system, the rotational angle of the rotor 42 per single switching of the excitation phase mode becomes smaller. The angle of the throttle valve 4 can therefore be controlled finely. In the 2 phase excitation system, by contrast, the rotational angle of the rotor 42 per single switching of the excitation phase mode becomes larger. This speeds up the operational motion of the throttle valve 4. Selectively using the two excitation systems according to the situation can improve both the precision and the response characteristic of the angle control on the throttle valve 4.

According to this embodiment, the motor's rotational angle per single switching of the excitation phase mode when the 1-2 phase excitation system is used is defined as one step. When the 2 phase excitation system is used, therefore, every time the excitation phase mode is switched once, the motor 40 rotates by two steps.

The specific control on the stepping motor 40 will now be discussed. As has been explained with regard to the first embodiment, the angle of the throttle valve 4 corresponds to the number of steps (step number) by which the stepping motor 40 that actuates the throttle valve 4 has moved. The ECU 19 determines the step number of the stepping motor 40, and the ECU 19 uses the step number to control the motor 40 so that the throttle valve 4 will have the desired angle. If the stepping motor 40 steps out or the engine 1 stops, which inhibit energization of the stepping motor 40, the step number of the stepping motor 40 does not accurately correspond to the angle of the throttle valve 4. In this respect, an initializing process of establishing the relationship between the step number of the motor 40 and the angle of the throttle valve 4 is performed prior to the angle control of the throttle valve 4.

This initializing process will be discussed below. When the initializing process starts, the ECU 19 checks the ON/OFF status of the fully open switch 39 first. Then, the ECU 19 drives the stepping motor 40 in a direction to change the current ON/OFF status of the fully open switch 39 and sets the rotational position of the motor 40 when the status change is made as a reference position. When the fully open switch 39 is currently off, for example, the stepping motor 40 is driven in a direction to set the fully open switch 39 on, and the rotational position of the motor 40 when the fully open switch 39 becomes on is set as a reference position.

When the motor 40 reaches the reference position, the ECU 19 sets the current step number or the actual step number LSACT to "0" and sets the value of the current excitation phase mode as an offset value LSOF. As in the first embodiment, when the motor 40 is driven in a direction to open the throttle valve 4, the step number LSACT is decremented by the number of driven steps of the motor 40, and when the motor 40 is driven in a direction to close the throttle valve 4, the step number LSACT is incremented by the number of driven steps of the motor 40. By determining the step number LSACT of the motor 40 from the reference position, the angle of the throttle valve 4 can be determined precisely.

In controlling the stepping motor 40, a value LSTP, which is the offset value LSOF added to the actual step number LSACT, is employed. This value LSTP is actually expressed by a binary number consisting of a plurality of bits, the lower three bits indicating the value of the excitation phase mode corresponding to the current step number LSACT- Referring to Figure 17, when the value of the excitation phase mode when the motor 40 has reached the reference position is "3", for example, the offset value LSOF is set to "3". When the motor 40 is driven by six steps from this state in a direction to close the throttle valve 4, the actual step number LSACT becomes "6". Thus, the value LSTP at this time becomes "9" which is the offset value LSOF of "3" added to the actual step number LSACT of "6". The lower three bits representing this value "9" in a binary form is "001" which is equivalent to "1" in a decimal form. That is, the value "1" indicates the value of the excitation phase mode corresponding to the current step number LSACT of "6".

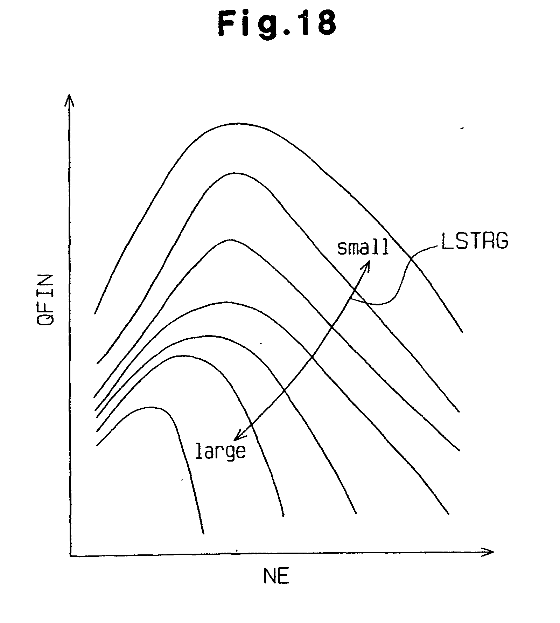

When the above-described initializing process is completed, the angle control on the throttle valve 4 commences. In implementing this control, the target step number LSTRG corresponding to the target angle of the throttle valve 4 is computed in an unillustrated "target step number computing routine", which is like the routine of Figure 5 in the first embodiment. Specifically, the ECU 19 calculates the target step number LSTRG based on the engine speed NE and the fuel injection amount QFIN. As shown in Figure 18, function data that defines the relationship among the engine speed NE, the fuel injection amount QFIN and the target step number LSTRG is stored in the ROM 61. The ECU 19 refers to this function data when computing the target step number LSTRG. The acquired target step number LSTRG is corrected according to parameters including the atmospheric pressure detected by the pressure sensor 6, the coolant temperature detected by the coolant temperature sensor 77 and the atmospheric temperature detected by the temperature sensor 78, in order to secure the proper amount of intake air according to the running condition of the engine 1.

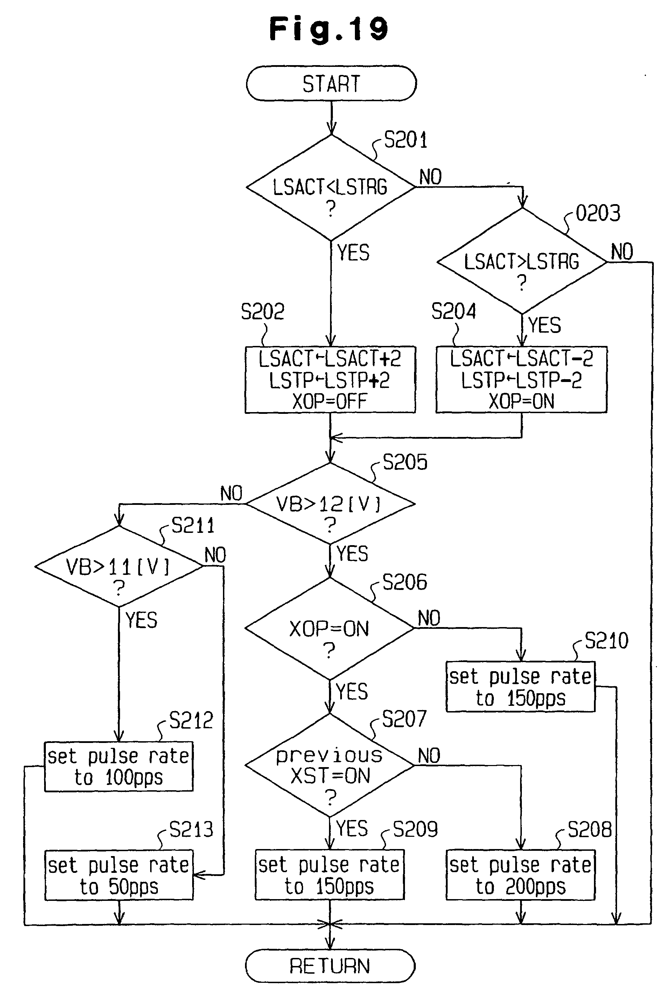

In controlling the angle of the throttle valve 4, the ECU 19 executes a "stepping motor control routine" as illustrated in the flowchart of Figure 19. The interruption cycle of this routine is equivalent to the cycle of switching the excitation phase mode. The reciprocal of the switching cycle of the excitation phase mode is equivalent to the frequency of a pulse signal given to the motor 40 from the driver 72 or the pulse rate. The greater the value of the pulse rate is, therefore, the shorter the switching cycle of the excitation phase mode becomes, quickening the drive speeds of the stepping motor 40 and the throttle valve 4.

This embodiment selectively uses the 1-2 phase excitation system, which drives the stepping motor 40 step by step every time the excitation phase mode is changed, and the 2 phase excitation system, which drives the stepping motor 40 by two steps every time the excitation phase mode is changed. Even with the same pulse rate, therefore, the drive speed of the throttle valve 4 when the motor 40 is driven by the 2 phase excitation system doubles that of the throttle valve 4 when the motor 40 is driven by the 1-2 phase excitation system. Normally, the stepping motor 40 is driven by the 2 phase excitation system.

When the process of the ECU 19 goes to this routine, the ECU 19 determines in step 201 whether the current actual step number LSACT is smaller than the target step number LSTRG. When the actual step number LSACT is smaller than the target step number LSTRG, the stepping motor 40 is controlled such that the actual step number LSACT approaches the target step number LSTRG, actuating the throttle valve 4 in the closing direction. When the decision in step 201 is affirmative, therefore, the ECU 19 proceeds to step 202 to set the current actual step number LSACT plus "2" as a new actual step number LSACT. The ECU 19 also sets the current value LSTP plus "2" as a new value LSTP.

Further, the ECU 19 sets an valve open flag XOP to "OFF". This valve open flag XOP is set "ON" when the throttle valve 4 is actuated in the opening direction, and is set "OFF" when the throttle valve 4 is actuated in the closing direction.

As mentioned in the foregoing description with reference to Figure 17, the lower three bits of the value LSTP indicate the value of the excitation phase mode. Based on the value LSTP, therefore, the ECU 19 can accurately determine the next excitation phase mode to be selected.

When the decision in step 201 is negative, on the other hand, the ECU 19 determines in step 203 whether the current actual step number LSACT is greater than the target step number LSTRG. When the actual step number LSACT is larger than the target step number LSTRG, the stepping motor 40 is controlled such that the actual step number LSACT approaches the target step number LSTRG, actuating the throttle valve 4 in the opening direction. When the decision in step 203 is affirmative, therefore, the ECU 19 proceeds to step 204 to set the current actual step number LSACT minus "2" as a new actual step number LSACT. The ECU 19 also sets the current value LSTP minus "2" as a new value LSTP. Further, the ECU 19 sets the valve open flag XOP to "ON".

When the difference between the actual step number LSACT and the target step number LSTRG is just "1", the stepping motor 40 has only to be driven by one step so that the motor 40 is driven by the 1-2 phase excitation system. In this case, the ECU 19 increments or decrements the current actual step number LSACT and the current value LSTP by "1" in step 202 or step 204, respectively.

The ECU 19 controls the stepping motor via the driver 72 in this manner so that the actual step number LSACT of the motor 40 coincides with the target step number LSTRG. As a result, the throttle valve 4 is moved to the angle corresponding to the target step number LSTRG, providing an amount of intake air suitable for the current running condition of the engine 1.

When the decision in the step 203 is negative or when the current actual step number LSACT matches with the target step number LSTRG, the throttle valve 4 currently is at the target angle, so the stepping motor 40 will be stopped. Accordingly, the ECU 19 temporarily terminates this routine.

When the stepping motor 40 is stopped, or when the stepping motor 40 is rotated in the reverse direction, the force of inertia of the rotor 42 of the motor 40 may cause the motor 40 to step out. When the current actual step number LSACT coincides with the target step number LSTRG or when the target step number LSTRG is changed to reverse the current rotational direction of the stepping motor 40, therefore, the ECU 19 keeps the current excitation phase mode and holds the motor 40 stopped for a predetermined time needed to stabilize the motor 40, though this is not illustrated in the flowchart of Figure 19. At the same time, the ECU 19 sets a stop flag XST indicating that the motor 40 is stopped to "ON". When the motor 40 is driven, the stop flag XST is set "OFF".

After executing the process of step 202 or step 204, the ECU 19 goes to step 205. In step 205, the ECU 19 determines whether the battery voltage VB is higher than 12 V. When the battery voltage VB is higher than 12 v, the ECU 19 determines that a sufficient voltage is applied to the stepping motor 40, and proceeds to step 206.

In step 206, the ECU 19 determines whether the valve open flag XOP is "ON", i.e., if the throttle valve 4 is driven in the opening direction. When the valve open flag XOP is set "ON", the ECU 19 moves to step 207 to determine if the stop flag XST had been set "ON" immediately before this routine started. When the decision here is negative, or when the motor 40 is not activated, the ECU 19 proceeds to step 208 to set the pulse rate to 200 PPS. When the decision in step 207 is affirmative, i.e., when the motor 40 is activated, the ECU 19 proceeds to step 209 to set the pulse rate to 150 PPS.

In other words, in the case of driving the throttle valve 4 in the opening direction, when the battery voltage VB is at or above a sufficient level and the motor 40 is not activated, the motor 40 is driven at the normal speed by a pulse signal having a pulse rate of 200 PPS. The motor 40 however requires a large drive torque when it is activated from the stationary state. At the time of activating the motor 40, therefore, the motor 40 is driven at a low speed by a pulse signal having a pulse rate of 150 PPS. Consequently, the motor 40 can be activated with a sufficient drive torque without stepping out.

When the valve open flag XOP is not set "ON" in the step 206, or when the throttle valve 4 is driven in the closing direction, on the other hand, the ECU 19 goes to step 210. In step 210, the ECU 19 sets the pulse rate to 150 PPS.

As mentioned earlier, the throttle valve 4 is urged in the opening direction by the return spring 27 (see Figure 10). When the stepping motor 40 is driven to open the throttle valve 4, the motor 40 is helped by the return spring 27. When the stepping motor 40 is driven to close the throttle valve 4, the motor 40 must be driven against the urging force of the return spring 27. When the stepping motor 40 is driven in the direction to close the throttle valve 4, therefore, the motor 40 is driven at a low speed by a 150 PPS pulse signal. As a result, the motor 40 can be driven with a sufficient drive torque without stepping out.

When the battery voltage VB is higher than 12 V and the throttle valve 4 is actuated in the closing direction, the pulse rate is always set to 150 PPS regardless of whether or not the motor 40 is activated. This is because, with the pulse rate of 150 PPS, the drive torque is large enough to drive the valve 4 even when the throttle valve 4 is driven in the closing direction.

When the decision in the step 205 is negative, or when the battery voltage VB is equal to or lower than 12 V, the ECU 19 determines that the voltage to be applied to the stepping motor 40 is insufficient and proceeds to step 211. In step 211, the ECU 19 determines if the battery voltage VB is higher than 11 V. When the battery voltage VB is higher than 11 v, i.e., when the battery voltage VB lies in the range of 11 to 12 V, the ECU 19 goes to step 212.

In step 212, the ECU 19 sets the pulse rate to 100 PPS irrespective of the driving direction of the throttle valve 4 or whether or not the motor 40 is activated. When the decision in step 211 is negative or when the battery voltage VB is equal to or lower than 11 V, on the other hand, the ECU 19 goes to step 213. In step 213, the ECU 19 sets the pulse rate to 50 PPS regardless of the driving direction of the throttle valve 4 or whether or not the motor 40 is activated.

When the battery voltage VB is equal to or lower than 12 V, it is judged that the stepping motor 40 is susceptible to interference, so the motor 40 is driven at a lower speed than the normal speed. In other words, when a situation that may interfere with the operation of the stepping motor 40 occurs, the operation of the motor 40 is restricted to avoid the interference as in the first embodiment.

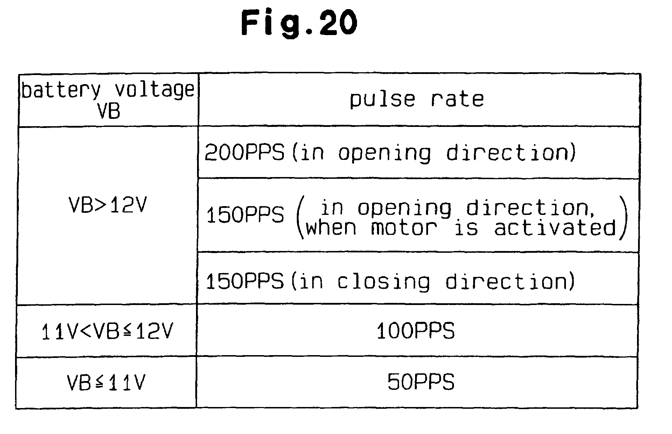

Figure 20 presents a table showing the relationship between the battery voltage VB and the pulse rate. As illustrated in the diagram, when the battery voltage VB is higher than 12 V or when the applied voltage to the stepping motor 40 is sufficient, the pulse rate is mainly changed in accordance with the driving direction of the throttle valve 4. That is, the pulse rate is set higher to increase the drive speed of the motor 40 when driving the throttle valve 4 in the opening direction higher than when driving the throttle valve 4 in the closing direction.

When the stepping motor 40 is driven to open the throttle valve 4, the motor 40 is helped by the return spring 27. Even with the motor 40 having a small drive torque, thus, the motor does not step out and the speed of driving the throttle valve 4 in the opening direction can be increased. If the opening of the throttle valve 4 is delayed, the amount of air supplied to the combustion chamber 12 becomes insufficient, increasing the amount of smoke in the exhaust gas. Such a problem is however overcome by this embodiment, which ensures fast opening of the throttle valve 4. However, the slow drive speed at the time of activating the motor 40 prevents the motor 40 from stepping out when being activated.

When the stepping motor 40 is driven to close the throttle valve 4, on the other hand, the motor 40 must be driven against the urging force of the return spring 27. What is more, the throttle valve 4 is urged in the closing direction by the air that flows inside the air-intake passage 2. When the stepping motor .40 is driven in the direction to close the throttle valve 4, therefore, the motor 40 is driven at a low speed to increase the drive torque. If the amount of intake air to be supplied to the combustion chamber 12 becomes more than necessary due to the delayed closing operation of the throttle valve 4, however, no significant problems, such as increased smoke production or a bad condition of the engine 1 would occur. Thus, driving the motor 40 at a low speed does not raise any problem. This eliminates the need for a large stepping motor capable of generating a large drive torque and permits the use of a small and inexpensive stepping motor- The use of a small stepping motor reduces the overall size and the power dissipation of the apparatus.

When the battery voltage VB is equal to or lower than 12 V or when the applied voltage to the stepping motor 40 is insufficient, the motor 40 is driven at a lower speed than that where the battery voltage VB is higher than 12 V, in order to avoid stepping-out.

In short, this embodiment ensures finer control on the drive speed of the motor 40 in accordance with the operational condition of the motor 40 than the first embodiment.

According to this embodiment, though not particularly illustrated, the pulse rate is changed in accordance with the running condition of the engine 1 as in the first embodiment, as well as in accordance with the above-described conditions including the level of the battery voltage VB and the driving direction of the throttle valve 4.

Specifically, when the key switch 20 is turned off or the engine 1 is not operating properly, the ECU 19 sets the target step number LSTRG of the stepping motor 40 to a value corresponding to the fully closed position of the throttle valve 4. In this case, the ECU 19 sets the pulse rate to 200 PPS or 150 PPS regardless of the aforementioned conditions including the level of the battery voltage VB and the driving direction of the throttle valve 4.

When the key switch 20 is turned off or when the engine 1 is not running properly, therefore, the throttle valve 4 is quickly actuated to the fully closed position. That is, when it becomes necessary to stop the engine 1, prompt stopping of the engine 1 has a higher priority over prevention of stepping-out of the stepping motor 40 as in the first embodiment. This embodiment therefore provides the same advantages as the first embodiment.

As mentioned earlier, in starting the engine 1, the initializing process of establishing the relationship between the step number of the motor 40 and the angle of the throttle valve 4 is executed. Thus, no problem would arise if the stepping motor 40 steps out during the process of forcibly driving the throttle valve 4 to the fully closed position.

The values of different pulse rates used in this embodiment may be changed as needed. Further, the reference value for the battery voltage VB based on which switching the pulse rate is determined may also be changed as needed. Furthermore, the decision on whether or not the engine 1 is running properly may be made based on whether or not the engine speed NE is equal to or greater than the predetermined value NE1 or based on whether or not a unit associated with fuel injection, such as the fuel injection pump 14 or the injection nozzle 11 is normal as in the first embodiment.

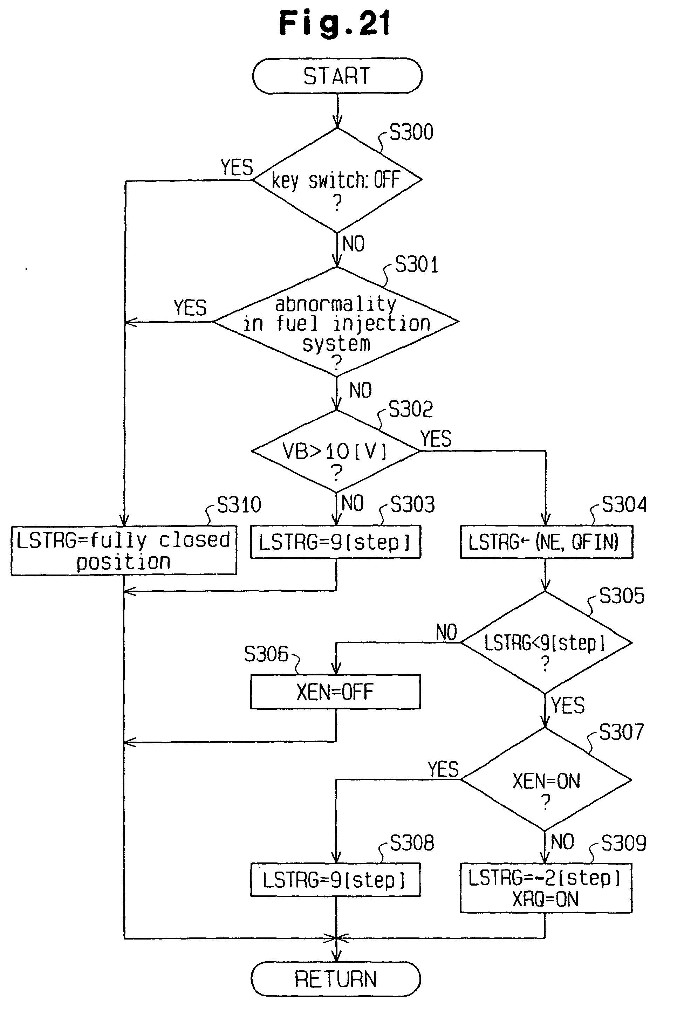

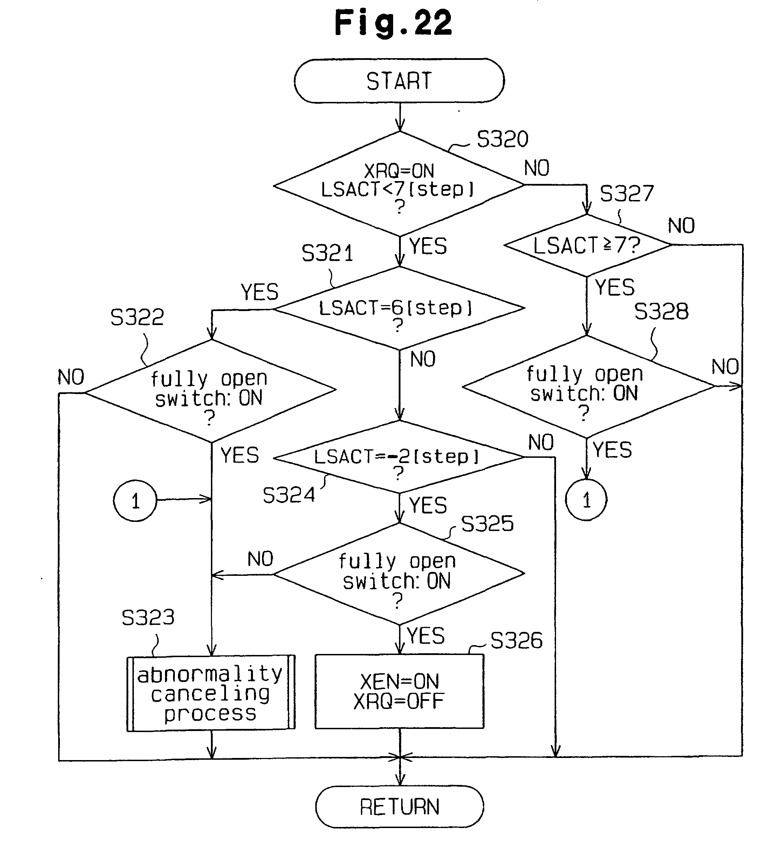

A third embodiment of the present invention will now be described with reference to Figures 21 and 22. This embodiment differs from the second embodiment only in how to control the stepping motor 40, but is the same in the mechanical structure and the electric structure. The following description will therefore center on the differences from the second embodiment.

According to the first and second embodiments, when the battery voltage VB drops to a level that may interfere with the operation of the stepping motor 40, the motor 40 is driven at a lower speed than the normal speed. According to this embodiment, by contrast, when the battery voltage VB drops to a level that may interfere with the operation of the stepping motor 40, the target angle position of the throttle valve 4 is set to a predetermined specific angle position (close to the fully open position) and the throttle valve 4 is held at the specific angle position.

In other words, when something happens to interfere with the operation of the motor 40, the motor 40 is driven at a low speed to restrict the operation of the motor 40 in the first and second embodiment. According to the third embodiment, when some situation occurs to interfere with the operation of the motor 40, the motor 40 is controlled to hold the throttle valve 4 at the specific angle position to restrict the operation of the motor 40. The details will be given based on a flowchart in Figure 21.

According to this embodiment, an initializing process of establishing the relationship between the step number of the motor 40 and the angle of the throttle valve 4 is performed prior to the angle control on the throttle valve 4, as per the second embodiment. This initializing process allows the angle of the throttle valve 4 to be determined accurately based on the number of steps the motor 40 takes from the reference position.

After the initializing process is completed, the stepping motor 40 is controlled so that the throttle valve 4 will have a target angle. Figure 21 is a flowchart illustrating a "target step number computing routine" for computing the target step number LSACT corresponding to the target angle of the throttle valve 4. The ECU 19 executes this routine as an interruption process at predetermined time intervals.

When the ECU 19 enters this routine, the ECU 19 first determines in step 300 if the key switch 20 is off. When the key switch 20 is on, i.e., when the engine 1 is running, the ECU 19 goes to step 301.

In step 301, the ECU 19 determines whether a failure has occurred in the fuel injecting system including the fuel injection pump 14 and the injection nozzle 11. When the decision here is negative, the ECU 19 judges that the engine 1 is running properly and moves to step 302.

In step 302, the ECU 19 determines whether the battery voltage VB is higher than 10 V. When the battery voltage VB is higher than 10 V, the ECU 19 determines that a sufficient voltage is applied to the stepping motor 40 and proceeds to step 304. In step 304, the ECU 19 computes the target step number LSTRG based on the engine speed NE and the fuel injection amount QFIN. The ECU 19 refers to the function data shown in Figure 18 when computing the target step number LSTRG as in the second embodiment.

In this case, the ECU 19 executes steps substantially identical to steps 206 to 210 in Figure 19, which has been referred to in describing the second embodiment. When the battery voltage VB is higher than 10 v, the pulse rate is set to 200 PPS or 150 PPS depending on the driving direction of the throttle valve 4 and whether or not the motor 40 is activated. The ECU 19 controls the stepping motor 40 at the pulse rate of 200 PPS or 150 PPS such that the actual step number LSACT of the motor 40 coincides with the target step number LSTRG.

When the decision in step 302 is negative or when the battery voltage VB is equal to or lower than 10 V, the ECU 19 determines that the voltage to be applied to the stepping motor 40 is insufficient and proceeds to step 303. In step 303, the ECU 19 sets the target step number LSTRG to "9" after which the ECU 19 temporarily terminates the processing.

As has been discussed in the foregoing description of the second embodiment, the rotational position of the motor 40 when the ON/OFF status of the fully open switch 39 is changed is set as a reference position in the initializing process. The actual step number LSACT of the motor 40 at this reference position is set to "0". Thus, the angle position of the throttle valve 4 that corresponds to the target step number LSTRG of "9" is equivalent to the position of the motor 40 rotated by nine steps from the reference position in the closing direction of the throttle valve 4. The reference position is equivalent to the position of the throttle valve 4 slightly driven in the closing direction from the fully open position. Therefore, the angle position of the throttle valve 4 corresponding to the target step number LSTRG of "9" is in the vicinity of the fully open position of the throttle valve 4.

When the battery voltage VB is equal to or lower than 10 V, therefore, the target step number LSTRG is set to a value corresponding to the angle position near the fully open position of the throttle valve 4. Accordingly, the ECU 19 controls the stepping motor 40 such that the throttle valve 4 is moved to the vicinity of the fully open position and holds the throttle valve 4 at that position. In other words, when the voltage to be applied to the stepping motor 40 is insufficient, the ECU 19 controls the motor 40 so that the throttle valve 4 is held at a specific angle position. The pulse rate at which the throttle valve 4 is actuated to the specific angle position may be set in substantially the same way as steps 206-210 of Figure 19, as in the case where the battery voltage VB is higher than 10 V. Alternatively, the pulse rate may be set lower than the normal pulse rate (200 PPS or 150 PPS).

When the voltage to be applied to the stepping motor 40 is insufficient, the throttle valve 4 is held at the specific angle position and driving the stepping motor 40 is inhibited. When the motor 40 is driven with an insufficient battery voltage VB, the motor 40 is likely to step out. Inhibiting the driving of the motor 40 however prevents such stepping-out. At this time, the ECU 19 keeps the current excitation phase mode and holds the motor 40 stopped in order to keep the specific angle position of the throttle valve 4. This prevents the throttle valve 4 from chattering due to the pulsation of the intake air or the vibration of the engine 1.

As explained in the description of the second embodiment, even when the amount of intake air to be supplied to the combustion chamber 12 becomes greater than is necessary, problems, such as smoke in the exhaust gas or a bad running condition of the engine 1, would not occur. When the battery voltage VB drops, therefore, the throttle valve 4 can be moved to the vicinity of the fully open position to guarantee the necessary amount of intake air.

After executing the step 304, the ECU 19 determines in step 305 whether the target step number LSTRG is smaller than "9". When the decision is negative or when the target step number LSTRG is equal to or larger than "9", the ECU 19 proceeds to step 306 to set an end flag XEN "OFF" and then terminates the processing.

When the target step number LSTRG is smaller than "9", it is judged that a full open instruction to fully open the throttle valve 4 has been issued in this embodiment. Every time the full open instruction is generated, a checking process (see Figure 22) for checking whether a correlation between the actual step number LSACT of the stepping motor 40 and the angle of the throttle valve 4 is proper is executed. The aforementioned end flag XEN is used, together with a request flag XRQ to be discussed later, to determine whether the checking process should be carried out. The end flag XEN is set "ON" when the checking process is completed, and is set "OFF" when the target step number LSTRG becomes equal to or greater than "9".

When the decision in the step 305 is positive or when the target step number LSTRG is smaller than "9", the ECU 19 goes to step 307 to determine whether the end flag XEN is "ON". When the end flag XEN is "ON", the ECU 19 determines that the checking process has finished, and moves to step 308. In step 308, the ECU 19 sets the target step number LSTRG to "9" and then temporarily terminates the processing.

When the end flag XEN is "OFF" in the step 307, the ECU 19 determines that, while the full open instruction has been issued, the checking process has not been performed yet and moves to step 309. In step 309, the ECU 19 sets the target step number LSTRG to "-2", sets the request flag XRQ "ON", and then temporarily terminates the processing.

In the initializing process, as has been discussed earlier, the rotational position of the motor 40 when the ON/OFF status of the fully open switch 39 is changed is set as a reference position, and the actual step number LSACT of the motor 40 at this reference position is set to "0". To positively hold the fully open switch 39 at the ON state, therefore, it is desirable to position the throttle valve 4 further than the reference position in the opening direction. This requires that the target step number. LSTRG should be set smaller than "0" ("-2" in this embodiment). This setting guarantees that the fully open switch 39 will be held on even if the fully open switch 39 chatters due to the vibration or the like of the engine 1. This advantage is effective in accurately executing the checking process in Figure 22 which will be discussed later.

When the key switch 20 is off or when some manipulation to stop the engine 1 is carried out in step 300, the ECU 19 proceeds to step 310. When the decision in the step 301 is affirmative, the ECU 19 judges that the engine 1 is not running properly and proceeds to step 310.

In step 310, the ECU 19 sets the target step number LSTRG to a value corresponding to the fully closed position of the throttle valve 4 to block the air flow to the combustion chamber 12 and then temporarily terminates the processing. In this case, the ECU 19 sets the pulse rate to the normal value, 200 PPS or 150 PPS, regardless of the level of the battery voltage VB or other conditions including the drive direction of the throttle valve 4.

Specifically, when the key switch 20 is turned off or when the engine 1 is not running properly, the throttle valve 4 is promptly moved to the fully closed position. That is, when it becomes necessary to stop the engine 1, prompt stopping of the engine 1 has a higher priority over restriction of the operation of the stepping motor 40 as in the first and second embodiments. The third embodiment therefore provides the same advantages as the first and second embodiments. Further, no problem arises if the stepping motor 40 steps out during the process of driving the throttle valve 4 to the fully closed position, as in the second embodiment.

Figure 22 is a flowchart showing an "abnormality detecting routine", a process of checking if the correlation between the actual step number LSACT of the stepping motor 40 and the angle of the throttle valve 4 is proper. The interruption cycle for this routine is equivalent to the cycle for switching the excitation phase mode of the motor 40 (which has already been explained in the description of the second embodiment).

When the ECU 19 goes to this routine, the ECU 19 determines in step 320 whether the request flag XRQ is "ON" and whether the current step number LSACT is smaller than "7". When the decision is positive, the ECU 19 proceeds to step 321 to determine if the current step number LSACT is "6".

When the current step number LSACT is "6", the ECU 19 moves to step 322 to determine whether the fully open switch 39 is on. If the correlation between the actual step number LSACT of the stepping motor 40 and the angle of the throttle valve 4 is correct, the fully open switch 39 should be off. When the fully open switch 39 is off, therefore, the ECU 19 determines that no abnormality has occurred, and temporarily terminates the processing.

When step 322 is performed, the ECU 19 makes the switching cycle of the excitation phase mode of the motor 40 longer. This provides necessary time for chattering of the motor 40 and the throttle valve 4 to fade out, so that the ON/OFF status of the fully open switch 39 can be determined accurately.

When the fully open switch 39 is on in step 322, the ECU 19 determines that some abnormality has occurred, and goes to step 323. In step 323, the ECU 19 executes a process of canceling the abnormality. In this process, the ECU 19 first performs the above-described initializing process. If the cause for the abnormality is the stepping-out of the motor 40, the initializing process corrects the correlation between the actual step number LSACT of the stepping motor 40 and the angle of the throttle valve 4. Therefore, accurate angle control on the throttle valve 4 is thus possible.

When the initializing process is not carried out properly, the ECU 19 determines that some abnormality, which is difficult to correct, has occurred in the drive system of the throttle valve 4. Such an abnormality may be a failure in the fully open switch 39, or malfunction of the stepping motor 40 or the throttle valve 4. When such an abnormality occurs, the ECU 19 maintains the current excitation phase mode to fix the throttle valve 4 to the current angle position. The ECU 19 also stops the EGR control and restricts the fuel injection amount. As a result, the engine 1 is kept running at the minimum required conditions.

Even if the angle control on the throttle valve 4 is corrected through the above processes, when an abnormality has been determined more than a predetermined number of times in step 322 since the activation of the engine 1, the ECU 19 determines that the engine 1 is abnormal. Then, the ECU 19 executes a process of, for example, stopping the angle control on the throttle valve 4.

When the decision in the step 321 is negative or when the current step number LSACT is smaller than "6", on the other hand, the ECU 19 proceeds to step 324. In step 324, the ECU 19 determines whether the current step number LSACT is "-2". The decision in the step 320 that the request flag XRQ is "ON" means that the target step number LSTRG has been set to "-2" in step 309 in Figure 21. In this step 324, therefore, the ECU 19 determines whether the current step number LSACT has reached "-2" or the target step number LSTRG.

When the current step number LSACT has not reached "-2" yet, the ECU 19 temporarily terminates the processing. When the current step number LSACT has reached "-2", the ECU 19 moves to step 325 to determine whether the fully open switch 39 is on. If the correlation between the actual step number LSACT of the stepping motor 40 and the angle of the throttle valve 4 is correct, the fully open switch 39 should be on. When the fully open switch 39 is off, therefore, the ECU 19 determines that there is an abnormality, and proceeds to step 323 to execute the aforementioned process of canceling the abnormality. When the fully open switch 39 is on, on the other hand, the ECU 19 determines that there is no abnormality, and proceeds to step 326.

In step 326, the ECU 19 judges that the checking process has been completed, sets the end flag XEN "ON" and sets the request flag XRQ "OFF" before temporarily terminating the process. When the target step number LSTRG becomes smaller than "9" or when the full open instruction has been issued, the aforementioned checking process is executed just once, not several times.

When the decision in the step 320 is negative, i.e., when the request flag XRQ is "OFF" or when the current step number LSACT is equal to or larger than "7", on the other hand, the ECU 19 goes to step 327. In step 327, the ECU 19 determines if the current step number LSACT is equal to or larger than "7". When the decision here is negative or when the current step number LSACT is smaller than "7", the ECU 19 determines that the request flag XRQ is "OFF" and temporarily terminates the processing. When the current step number LSACT is equal to or larger than "7", the ECU 19 proceeds to step 328.

In step 328, the ECU determines whether the fully open switch 39 is on. In this case, if the correlation between the actual step number LSACT of the stepping motor 40 and the angle of the throttle valve 4 is correct, the fully open switch 39 should be off. When the fully open switch 39 is off, therefore, the ECU 19 determines that there is no abnormality and temporarily terminates the processing. When the fully open switch 39 is on, on the other hand, the ECU 19 determines that there is an abnormality and proceeds to step 323 to execute the aforementioned abnormality canceling process. In executing the process of step 328, the ECU 19 sets the switching cycle of the excitation phase mode of the motor 40 longer to accurate determine the ON/OFF state of the fully open switch 39 as in the case of step 322.

As indicated by steps 302 and 303 in Figure 21, the target step number LSTRG, which is set when the battery voltage VB is insufficient, is "9". When the target step number LSTRG is set to "9", the full open instruction is not generated so that the checking process in Figure 22 is not carried out. With an insufficient battery voltage VB, it is hard to precisely carry out the checking process. While the motor 40 moves in the checking process, if the motor 40 operates with an insufficient battery voltage VB, the motor 40 may step out. Omitting the checking process when the battery voltage VB is insufficient can prevent the motor 40 from stepping out in the checking process as well as prevent an erroneous determination in the checking process.

In this embodiment, the fully open switch 39 is provided in the gear box 28 of the valve driving mechanism 5. This is but one of many possible locations. The fully open switch 39 may be provided in the throttle body 25 to directly detect the angle of the throttle valve 4, or it may be a switch for detecting the rotational angle of the valve shaft 26. Further, the fully open switch 39 need not take the form of a switch as long as it can detect when the throttle valve 4 is at the fully closed position.

Although the ECU 19 controls the motor 40 according to the programs stored in the ROM 61 in the first to third embodiments, the motor 40 may be controlled by a general-purpose processor which has control programs. Alternatively, the motor 40 may be controlled by a specific hardware element. Furthermore, the motor 40 may be controlled by a combination of a general-purpose processor and hardware.

The valve to which this invention is adapted is not limited to the throttle valve 4, but may be an EGR valve for controlling the EGR amount. This invention is not only for diesel engines, but may be adapted,for use in a gasoline engine.

Disclosed is an apparatus for controlling a throttle valve (4) in a diesel engine (1). The throttle valve (4) is provided in an air-intake passage (2) of the engine (1). The throttle valve (4) is driven by a stepping motor (40). When a battery voltage to be applied to the stepping motor (40) is insufficient, an electronic control unit (ECU 19) drives the stepping motor (40) at a slower speed than the normal speed to avoid stepping-out of the motor. When a key switch (20) for stopping the engine (1) is turned off or when the engine (1) is not running properly, the ECU (19) controls the stepping motor (40) to drive the throttle valve (4) to a fully closed position in order to stop the engine (1). In this case, the ECU (19) controls the stepping motor (40) at the normal speed, regardless of the battery voltage, so that the throttle valve (4) can be driven to the fully closed position quickly. The engine (1) therefore is promptly stopped.

**Claims**

1. An apparatus for controlling a throttle valve (**4**) provided in an air-intake passage (**2**) of an engine (**1** ), the angle position of the throttle valve (**4**) being changeable to adjust the opening amount of the air-intake passage (**2**), the apparatus comprising

    a stepping motor (**40**) for moving the throttle valve (**4**), wherein a drive step number of the stepping motor (**40**) corresponds to the angle position of the throttle valve (**4**);
    a controller (**19**) for controlling the stepping motor (**40**) to move the throttle valve (**4**) to an angle position corresponding to the current state of the engine (**1**); and
    a restrictor (**19**) for restricting operation of the stepping motor (**40**) during times when the stepping motor (**40**) is susceptible to interference, the apparatus being **characterized in that**:

    when a predetermined condition of the engine (**1**) is satisfied, the controller (**19**) drives the throttle valve (**4**) to a predetermined angle position without restricting operation of the stepping motor (**40**) regardless of whether the stepping motor (**40**) is susceptible to interference, wherein,
    in order to restrict the operation of the stepping motor (**40**), the restrictor (**19**) reduces the drive speed of the stepping motor (**40**) to restrict the operation of the stepping motor (**40**) or controls the stepping motor (**40**) such that the throttle valve (**4**) is held at a specific angle position.

2. The apparatus according to claim 1, **characterized in that** when a voltage applied to the stepping motor (**40**) falls below a certain level, the restrictor (**19**) restricts operation of the stepping motor (**40**)

3. The apparatus according to claim 1 or 2, **characterized in that** the predetermined angle position is a position at which the throttle valve (**4**) fully closes the air-intake passage (**2**) or a position near the fully closed position.

4. The apparatus according to claim 3, **characterized in that** when a key switch (**20**) for stopping the engine (**1**) is turned off or when the engine (**1**) is judged to be running improperly, the controller (**19**) determines that the predetermined condition is satisfied.

5. The apparatus according to claim 1, **characterized in that** the specific angle position is a position at which the throttle valve (**4**) fully opens the air-intake passage (**2**) or a position near the fully open position.

6. The apparatus according to claim 5, **characterized by** a checker (**19**) for checking whether a correlation between the drive step number of the stepping motor (**40**) and the angle position of the throttle valve (**4**) is correct when the throttle valve (**4**) is moved to the vicinity of the fully open position, and the specific angle position is different from an angle position of the throttle valve (**4**) at which a checking process is carried out.

7. The apparatus according to any one of claims 1 to 4, **characterized in that** a drive speed of the stepping motor (**40**) when the throttle valve (**4**) is moved in a direction to open the air-intake passage (**2**) is a first speed, and a drive speed of the stepping motor (**40**) when the throttle valve (**4**) is moved in a direction to close the air-intake passage (**2**) is a second speed, and the controller (**19**) sets the first speed faster than the second speed.

8. The apparatus according to claim 7, **characterized by** an urging device (**27**) for continuously urging the throttle valve (**4**) in an opening direction.

9. The apparatus according to claim 7 or 8, **characterized in that** when the throttle valve (**4**) starts moving in an opening direction, the restrictor (**19**) temporarily sets the drive speed of the stepping motor (**40**) slower than the first speed to temporarily restrict the operation of the stepping motor (**40**).

10. The apparatus according to claim 7 or 8, **characterized in that** when a voltage applied to the stepping motor (**40**) falls below a certain level, the restrictor (**19**) sets the drive speed of the stepping motor (**40**) slower than the second speed to restrict the operation of the stepping motor (**40**).

11. A method of controlling a throttle valve (**4**) provided in an air-intake passage (**2**) of an engine (**1**), the angle position of the throttle valve (**4**) being changeable to adjust the opening amount of the air-intake passage (**2**), the method comprising the steps of

   moving the throttle valve (**4**) by a stepping motor (**40**), wherein a drive step number of the stepping motor (**40**) corresponds to the angle position of the throttle valve (**4**); and restricting operation of the stepping motor (**40**) when a situation where the stepping motor (**40**) is susceptible to interference occurs, the method being **characterized in that**:

   when a predetermined condition of the engine (**1**) is satisfied, the throttle valve (**4**) is driven to a predetermined angle position without restricting operation of the stepping motor (**40**) regardless of whether the stepping motor (**40**) is susceptible to interference, wherein, in order to restrict the operation of the stepping motor (**40**), the drive speed of the stepping motor (**40**) is reduced or the stepping motor (**40**) is controlled such that the throttle valve (**4**) is held at a specific angle position to restrict the operation of the stepping motor (**40**).

12. The method according to claim 11, **characterized in that** operation of the stepping motor (**40**) is restricted, when a voltage applied to the stepping motor (**40**) falls below a certain level.

13. The method according to claim 11 or 12, **characterized in that** the predetermined angle position is a position at which the throttle valve (**4**) fully closes the air-intake passage (**2**) or a position near the fully closed position.

14. The method according to claim 13, **characterized by** a step of determining that the predetermined condition is satisfied when a key switch (**20**) for stopping the engine (**1**) is turned off or when the engine (**1**) is judged to be running improperly.

15. The method according to any one of claims 11 or 14, **characterized by** a step of controlling the stepping motor (**40**) such that the throttle valve (**4**) is held at a position to fully open the air-intake passage (**2**) or at a position near the fully open position to restrict the operation of the stepping motor (**40**).

16. The method according to any one of claims 11 or 14, **characterized in that** a drive speed of the stepping motor (**40**) when the throttle valve (**4**) is moved in a direction to open the air-intake passage (**2**) is a first speed, and a drive speed of the stepping motor (**40**) when the throttle valve (**4**) is moved in a direction to close the air-intake passage (**2**) is a second speed, and the first speed is faster than the second speed.

17. The method according to claim 16, **characterized in that** the throttle valve (**4**) is continuously urged in an opening direction.

18. The method according to claim 16 or 17, **characterized by** a step of setting the drive speed of the stepping motor (**40**) slower than the second speed to restrict the operation of the stepping motor (**40**) when a voltage applied to the stepping motor (**40**) falls below a certain level.

**Patentansprüche**

1. Gerät zur Steuerung einer Drosselklappe (**4**), die in einem Luftansaugdurchlass (**2**) einer Brennkraftmaschine (**1**) vorgesehen ist, wobei die Winkelposition der Drosselklappe (**4**) änderbar ist, um den Öffnungsgrad des Luftansaugdurchlasses (**2**) zu justieren, wobei das Gerät aufweist:

   einen Schrittmotor (**40**) zur Bewegung der Drosselklappe (**4**), wobei eine Antriebsschrittzahl des Schrittmotors (**40**) der Winkelposition der Drosselklappe (**4**) entspricht, eine Steuerungseinrichtung (**19**) zur Steuerung des Schrittmotors (40), um die Drosselklappe (4) zu einer Winkelposition entsprechend dem gegenwärtigen Zustand der Brennkraftmaschine (1) zu bewegen, und

eine Beschränkungseinrichtung (19) zur Beschränkung des Betriebs des Schrittmotors (40) während Zeiten, zu denen der Schrittmotor (40) gegenüber Störungen anfällig ist, wobei das Gerät **dadurch gekennzeichnet ist, dass**,

wenn eine vorbestimmte Bedingung der Brennkraftmaschine (1) erfüllt ist, die Steuerungseinrichtung (19) die Drosselklappe (4) auf eine vorbestimmte Winkelposition ohne Beschränkung des Betriebs des Schrittmotors (40) antreibt, ungeachtet davon, ob der Schrittmotor ( 40) für eine Störung empfänglich ist, wobei

zur Beschränkung des Betriebs des Schrittmotors (40) die Beschränkungseinrichtung (19) die Antriebsdrehzahl des Schrittmotors (40) verringert, um den Betrieb des Schrittmotors (40) zu beschränken, oder den Schrittmotor (40) derart steuert, dass die Drosselklappe (4) an einer spezifischen Winkelposition gehalten wird.

2. Gerät nach Anspruch 1, **dadurch gekennzeichnet, dass**, wenn eine an den Schrittmotor (40) angelegte Spannung unter einen bestimmten Pegel fällt, die Beschränkungseinrichtung (19) den Betrieb des Schrittmotors (40) einschränkt.

3. Gerät nach Anspruch 1 oder 2, **dadurch gekennzeichnet, dass** die vorbestimmte Winkelposition eine Position ist, zu der die Drosselklappe (4) den Luftansaugdurchlass (2) vollständig schließt, oder eine Position in der Nähe der vollständig geschlossenen Position ist.

4. Gerät nach Anspruch 3, **dadurch gekennzeichnet, dass**, wenn ein Schlüsselschalter (20) zum Stoppen der Brennkraftmaschine(1) ausgeschaltet wird, oder wenn beurteilt wird, dass die Brennkraftmaschine (1) unkorrekt läuft, die Steuerungseinrichtung (19) bestimmt, dass die vorbestimmte Bedingung erfüllt ist.

5. Gerät nach Anspruch 1, **dadurch gekennzeichnet, dass** die spezifische Winkelposition eine Position ist, zu der die Drosselklappe (4) vollständig den Luftansaugdurchlass (2) öffnet oder eine Position ist, die nahe an der vollständig geöffneten Position liegt.

6. Gerät nach Anspruch 5, **gekennzeichnet durch** eine Überprüfungseinrichtung (19) zur Überprüfung, ob eine Korrelation zwischen der Antriebsschrittzahl des Schrittmotors (40) und der Winkelposition der Drosselklappe (4) korrekt ist, wenn die Drosselklappe (4) in die Nähe der vollständig geöffneten Position bewegt wird, und die spezifische Winkelposition sich von einer Winkelposition der Drosselklappe (4) unterscheidet, bei der ein Überprüfungsvorgang ausgeführt wird.

7. Gerät nach einem der Ansprüche 1 bis 4, **dadurch gekennzeichnet, dass** eine Antriebsdrehzahl des Schrittmotors (40) bei Bewegung der Drosselklappe (4) in einer Richtung zum Öffnen des Luftansaugdurchlasses (2) eine erste Drehzahl ist, und eine Antriebsdrehzahl des Schrittmotors (40) bei Bewegung der Drosselklappe (4) zu einer Richtung zum Schließen des Ansaugluftdurchlasses (2) eine zweite Drehzahl ist, und die Steuerungseinrichtung (19) die erste Drehzahl schneller als die zweite Drehzahl einstellt.

8. Gerät nach Anspruch 7, **gekennzeichnet durch** eine Drängvorrichtung (27) zum kontinuierlichen Drängen der Drosselklappe(4) in eine Öffnungsrichtung.

9. Gerät nach Anspruch 7 oder 8, **dadurch gekennzeichnet, dass**, wenn die Drosselklappe (4) die Bewegung in einer Öffnungsrichtung beginnt, die Beschränkungseinrichtung (19) zeitweilig die Drehzahl des Schrittmotors (40) auf langsamer als die erste Drehzahl einstellt, um zeitweilig den Betrieb des Schrittmotors (40) einzuschränken.

10. Gerät nach Anspruch 7 oder 8, **dadurch gekennzeichnet, dass,** wenn eine an den Schrittmotor (40) angelegte Spannung unterhalb eines bestimmten Pegels fällt, die Beschränkungseinrichtung (19) die Antriebsdrehzahl des Schrittmotors (40) langsamer als die zweite Drehzahl zum Beschränken des Betriebs des Schrittmotors (40) einstellt.

11. Verfahren zur Steuerung einer Drosselklappe (4), die in einem Luftansaugdurchlass (2) einer Brennkraftmaschine (1) vorgesehen ist, wobei die Winkelposition der Drosselklappe (4) änderbar ist, um den Öffnungsgrad des Luftansaugdurchlasses (2) zu justieren, wobei das Verfahren die Schritte aufweist:

Bewegen der Drosselklappe (4)durch einen Schrittmotor (40), wobei eine Antriebsschrittzahl des Schrittmotors (40) der Winkelposition der Drosselklappe (4) entspricht,
Beschränken des Betriebs des Schrittmotors (40), wenn eine Situation auftritt, in der der Schrittmotor (40) gegenüber Störungen anfällig ist, wobei das Verfahren **dadurch gekennzeichnet ist, dass**,

wenn eine vorbestimmte Bedingung der Brennkraftmaschine (1) erfüllt ist, die Drosselklappe (4) zu einer vorbestimmten Winkelposition ohne Beschränkung des Betriebs des Schrittmotors (40) angetrieben wird, ungeachtet davon, ob der Schrittmotor (40) für eine Störung empfänglich ist, wobei zur Beschränkung des Betriebs des Schrittmotors (40) die Antriebsdrehzahl des Schrittmotors (40) verringert wird oder den Schrittmotor (40) derart gesteuert wird, dass die Drosselklappe (4) an einer spezifischen Winkelposition gehalten wird, um den Betrieb des Schrittmotors (40) zu beschränken.

12. Verfahren nach Anspruch 11, **dadurch gekennzeichnet, dass** der Betrieb des Schrittmotors (40) eingeschränkt wird, wenn eine an den Schrittmotor (40) angelegte Spannung unter einen bestimmten Pegel fällt.

13. Verfahren nach Anspruch 11 oder 12, **dadurch gekennzeichnet, dass** die vorbestimmte Winkelposition eine Position ist, zu der die Drosselklappe (4) den Luftansaugdurchlass (2) vollständig schließt, oder eine Position in der Nähe der vollständig geschlossenen Position ist.

14. Verfahren nach Anspruch 13, **gekennzeichnet durch** den Schritt Bestimmen, dass die vorbestimmte Bedingung erfüllt ist, wenn ein Schlüsselschalter (20) zum Stoppen der Brennkraftmaschine (1) ausgeschaltet wird, oder wenn beurteilt wird, dass die Brennkraftmaschine (1) unkorrekt läuft.

15. Verfahren nach einem der Ansprüche 11 oder 14, **gekennzeichnet durch** den Schritt Steuern des Schrittmotors (40) derart, dass die Drosselklappe (4) an einer Position zum vollständigen Öffnen des Luftansaugdurchlasses (2) oder an einer Position nahe an der vollständig geöffneten Position gehalten wird, um den Betrieb des Schrittmotors (40) zu beschränken.

16. Verfahren nach einem der Ansprüche 11 oder 14, **dadurch gekennzeichnet, dass** eine Antriebsdrehzahl des Schrittmotors (40) bei Bewegung der Drosselklappe (4) in einer Richtung zum Öffnen des Luftansaugdurchlasses (2) eine erste Drehzahl ist, und eine Antriebsdrehzahl des Schrittmotors (40) bei Bewegung der Drosselklappe (4) zu einer Richtung zum Schließen des Ansaugluftdurchlasses (2) eine zweite Drehzahl ist, und die erste Drehzahl schneller als die zweite Drehzahl ist.

17. Verfahren nach Anspruch 16, **dadurch gekennzeichnet, dass** die Drosselklappe(4) kontinuierlich in eine Öffnungsrichtung gedrängt wird.

18. Verfahren nach Anspruch 16 oder 17, **gekennzeichnet durch** den Schritt Einstellen der Antriebsdrehzahl des Schrittmotors (40) auf eine langsamere Drehzahl als die zweite Drehzahl, um den Betrieb des Schrittmotors (40) zu beschränken, wenn eine an den Schrittmotor (40) angelegte Spannung unter einen bestimmten Pegel fällt.

## Revendications

1. Appareil de commande d'un papillon des gaz (4) prévu dans un passage d'admission d'air (2) d'un moteur (1), la position d'angle du papillon des gaz (4) pouvant changer pour ajuster la quantité d'ouverture du passage d'admission d'air (2), l'appareil comprenant

   un moteur pas-à-pas (40) destiné à déplacer le papillon des gaz (4), dans lequel un nombre de pas d'entraînement du moteur pas-à-pas (40) correspond à la position d'angle du papillon des gaz (4) ;
   un contrôleur (19) destiné à commander le moteur pas-à-pas (40) pour déplacer le papillon des gaz (4) vers une position d'angle correspondant à l'état actuel du moteur (1) ; et
   un limiteur (19) destiné à limiter le fonctionnement du moteur pas-à-pas (40) pendant les moments où le moteur pas-à-pas (40) est sensible aux interférences, l'appareil étant **caractérisé en ce que** :

   lorsqu'une condition prédéterminée du moteur (1) est satisfaite, le contrôleur (19) entraîne le papillon des gaz (4) à une position d'angle prédéterminée sans limiter le fonctionnement du moteur pas-à-pas (40) que le moteur pas-à-pas (40) soit sensible aux interférences ou non, dans lequel,
   afin de limiter le fonctionnement du moteur pas-à-pas (40), le limiteur (19) réduit la vitesse d'entraînement du moteur pas-à-pas (40) pour limiter le fonctionnement du moteur pas-à-pas (40) ou commande le moteur pas-à-pas (40) d'une manière telle que le papillon des gaz (4) est maintenu à une position d'angle spécifique.

2. Appareil selon la revendication 1, **caractérisé en ce que** lorsqu'une tension appliquée au moteur pas-à-pas (40) chute au-dessous d'un certain niveau, le limiteur (19) limite le fonctionnement du moteur pas-à-pas (40).

3. Appareil selon la revendication 1 ou 2, **caractérisé en ce que** la position d'angle prédéterminée est une position au niveau de laquelle le papillon des gaz (4) ferme entièrement le passage d'admission d'air (2) ou une position proche de la position entièrement fermée.

**4.** Appareil selon la revendication 3, **caractérisé en ce que** lorsqu'un interrupteur à clé (20) destiné à arrêter le moteur (1) est désactivé ou lorsque le moteur (1) est jugé fonctionner de manière incorrecte, le contrôleur (19) détermine que la condition prédéterminée est satisfaite.

**5.** Appareil selon la revendication 1, **caractérisé en ce que** la position d'angle spécifique est une position au niveau de laquelle le papillon des gaz (4) ouvre entièrement le passage d'admission d'air (2) ou une position proche de la position entièrement ouverte.

**6.** Appareil selon la revendication 5, **caractérisé en ce qu'**un vérificateur (19) destiné à vérifier si une corrélation entre le nombre de pas d'entraînement du moteur pas-à-pas (40) et la position d'angle du papillon des gaz (4) est correcte lorsque le papillon des gaz (4) se déplace au voisinage de la position entièrement ouverte,--et la position d'angle spécifique est différente d'une position d'angle du papillon des gaz (4) au niveau de laquelle le processus de vérification est réalisé.

**7.** Appareil selon l'une quelconque des revendications 1 à 4, **caractérisé en ce qu'**une vitesse d'entraînement du moteur pas-à-pas (40) lorsque le papillon des gaz (4) est déplacé dans un sens pour ouvrir le passage d'admission d'air (2) est une première vitesse, et qu'une vitesse d'entraînement du moteur pas-à-pas (40) lorsque le papillon des gaz (4) est déplacé dans un sens pour fermer le passage d'admission d'air (2) est une deuxième vitesse, et le contrôleur (19) établit la première vitesse plus rapide que la deuxième vitesse.

**8.** Appareil selon la revendication 7, **caractérisé par** un dispositif de sollicitation (27) destiné à solliciter de manière continue le papillon des gaz (4) dans un sens d'ouverture.

**9.** Appareil selon la revendication 7 ou 8, **caractérisé en ce que** lorsque le papillon des gaz (4) commence à se déplacer dans un sens d'ouverture, le limiteur (19) établit temporairement la vitesse d'entraînement du moteur pas-à-pas (40) plus lente que la première vitesse pour limiter temporairement le fonctionnement du moteur pas-à-pas (40).

**10.** Appareil selon la revendication 7 ou 8, **caractérisé en ce que** lorsqu'une tension appliquée au moteur pas-à-pas (40) chute au-dessous d'un certain niveau, le limiteur (19) établit la vitesse d'entraînement du moteur pas-à-pas (40) plus lente que la deuxième vitesse pour limiter le fonctionnement du moteur pas-à-pas (40).

**11.** Procédé de commande d'un papillon des gaz (4) prévu dans un passage d'admission d'air (2) d'un moteur (1), la position d'angle du papillon des gaz (4) étant variable pour ajuster la quantité d'ouverture du passage d'admission d'air (2), le procédé comprenant les étapes consistant à

déplacer le papillon des gaz (4) par un moteur pas-à-pas (40), dans lequel un nombre de pas d'entraînement du moteur pas-à-pas (40) correspond à la position d'angle du papillon des gaz (4) ; et
limiter le fonctionnement du moteur pas-à-pas (40) lorsqu'une situation dans laquelle le moteur pas-à-pas (40) est sensible aux interférences se produit, le procédé étant **caractérisé en ce que** :

lorsqu'une condition prédéterminée du moteur (1) est satisfaite, le papillon des gaz (4) est entraîné à une position d'angle prédéterminée sans limiter le fonctionnement du moteur pas-à-pas (40) que le moteur pas-à-pas (40) soit sensible aux interférences ou non, dans lequel,
afin de limiter le fonctionnement du moteur pas-à-pas (40), la vitesse d'entraînement du moteur pas-à-pas (40) est réduite ou le moteur pas-à-pas (40) est commandé d'une manière telle que le papillon des gaz (4) est maintenu à une position d'angle spécifique pour limiter le fonctionnement du moteur pas-à-pas (40).

**12.** Procédé selon la revendication 11, **caractérisé en ce que** le fonctionnement du moteur pas-à-pas (40) est limité, lorsqu'une tension appliquée au moteur pas-à-pas (40) chute au-dessous d'un certain niveau.

**13.** Procédé selon la revendication 11 ou 12, **caractérisé en ce que** la position d'angle prédéterminée est une position au niveau de laquelle le papillon des gaz (4) ferme entièrement le passage d'admission d'air (2) ou une position proche de la position entièrement fermée.

**14.** Procédé selon la revendication 13, **caractérisé par** une étape consistant à déterminer que la condition prédéterminée est satisfaite lorsqu'un interrupteur à clé (20) destiné à arrêter le moteur (1) est désactivé ou lorsque le moteur (1) est jugé fonctionner de manière incorrecte.

**15.** Procédé selon l'une quelconque des revendications 11 à 14, **caractérisé par** une étape consistant à commander le moteur pas-à-pas (40) d'une manière telle que le papillon des gaz (4) est maintenu à une position pour ouvrir entièrement le passage d'admission d'air (2) ou à une position proche de la position entièrement ouverte pour limiter le fonctionnement du moteur pas-à-pas (40).

16. Procédé selon l'une quelconque des revendications 11 à 14, **caractérisé en ce qu'**une vitesse d'entraînement du moteur pas-à-pas (40) lorsque le papillon des gaz (4) est déplacé dans un sens pour ouvrir le passage d'admission d'air (2) est une première vitesse, et qu'une vitesse d'entraînement du moteur pas-à-pas (40) lorsque le papillon des gaz (4) est déplacé dans un sens pour fermer le passage d'admission d'air (2) est une deuxième vitesse, et la première vitesse est plus rapide que la deuxième vitesse.

17. Procédé selon la revendication 16, **caractérisé en ce que** le papillon des gaz (4) est sollicité de manière continue dans un sens d'ouverture.

18. Procédé selon la revendication 16 ou 17, **caractérisé par** une étape consistant à établir la vitesse d'entraînement du moteur pas-à-pas (40) plus lente que la deuxième vitesse pour limiter le fonctionnement du moteur pas-à-pas (40) lorsqu'une tension appliquée au moteur pas-à-pas (40) chute au-dessous d'un certain niveau.

## Fig.1

EP 0 887 534 B1

# Fig.2

Block diagram (reference 19) containing: CPU (60), ROM (61), RAM (62), backup RAM (63), connected via bus (64) to input interface (66) and output interface (67).

Input interface (66) receives signals from A/D converter (65), multi-plexer (68), buffers (69), and waveform shaping circuit (71).

Sensors and inputs: intake pressure sensor (159), acceleration sensor (18), coolant temperature sensor (77), battery (22), engine speed sensor (17), starter switch (21), fully open switch (39), key switch (20).

Output interface (67) connects to drivers (72, 73, 74, 75) which drive: stepping motor (40), actuator (10), timer control valve (15), spill valve (16).

24

# Fig.3

```
            ┌─────────────────┐
            │      START      │
            └─────────────────┘
                     │
                     ▼            ⌐S100
            ┌─────────────────┐
            │  compute ELBSE  │
            └─────────────────┘
                     │
                     ▼            ⌐S101
            ┌─────────────────┐
            │  compute METHW  │
            └─────────────────┘
                     │
                     ▼            ⌐S102
            ┌─────────────────┐
            │  compute MEPM   │
            └─────────────────┘
                     │
                     ▼            ⌐S103
            ┌─────────────────────┐
            │   compute ELTRG     │
            │ ⎛ELTRG=ELBSE×METHW⎞  │
            │ ⎝    ×MEPM        ⎠  │
            └─────────────────────┘
                     │
                     ▼            ⌐S104
            ┌─────────────────┐
            │   read ELACT    │
            └─────────────────┘
                     │
                     ▼            ⌐S105
            ┌─────────────────┐
            │  compute IEBSE  │
            └─────────────────┘
                     │
                     ▼            ⌐S106
            ┌─────────────────┐
            │  compute IEFB   │
            └─────────────────┘
                     │
                     ▼            ⌐S107
            ┌──────────────────────┐
            │   compute IEFIN      │
            │ (IEFIN=IEBSE+ΣIEFB)  │
            └──────────────────────┘
                     │
                     ▼
            ┌─────────────────┐
            │     RETURN      │
            └─────────────────┘
```

**Fig.4A**

**Fig.4B**

**Fig.4C**

**Fig.4D**

**Fig.4E**

# Fig.5

```
        ┌─────────────────────┐
        │        START        │
        └─────────────────────┘
                   │
                   ▼           ～S110
        ┌─────────────────────┐
        │ compute LSTRG based │
        │    on NE and QFIN   │
        └─────────────────────┘
                   │
                   ▼
        ┌─────────────────────┐
        │       RETURN        │
        └─────────────────────┘
```

# Fig.6

# Fig.7

```
                    ┌──────────────┐
                    │    START     │
                    └──────┬───────┘
                           │
                           ▼        ⌒S120
                      ╱─────────╲
                     ╱ LSACT<LSTRG╲      NO
                     ╲     ?      ╱───────────────┐
                      ╲─────────╱                 │
                           │ YES                  ▼        ⌒S122
                           │                 ╱──────────╲
                           │                ╱LSACT>LSTRG ╲   NO
                           │                ╲     ?     ╱────────┐
                           │                 ╲──────────╱        │
                           │                      │ YES          │
                           ▼   ⌒S121              ▼   ⌒S123       │
                  ┌────────────────┐     ┌────────────────┐      │
                  │LSACT←LSACT+1   │     │LSACT←LSACT-1   │      │
                  └────────┬───────┘     └────────┬───────┘      │
                           │                      └──────────────┤
                           ◄─────────────────────────────────────┘
                           │
                           ▼   ⌒S124
                      ╱─────────╲
                     ╱  VB≧10V?  ╲      NO
                     ╲          ╱───────────────┐
                      ╲─────────╱                │
                           │ YES                 │
                           ▼   ⌒S125             ▼   ⌒S126
                  ┌────────────────┐     ┌────────────────┐
                  │  TS←TS+5ms     │     │  TS←TS+10ms    │
                  └────────┬───────┘     └────────┬───────┘
                           │                      │
                           ◄──────────────────────┘
                           │
                           ▼
                    ┌──────────────┐
                    │   RETURN     │
                    └──────────────┘
```

# Fig.8

```
        ┌─────────────────────┐
        │        START        │
        └──────────┬──────────┘
                   │
                   │        ╭─S130
              ◇────┴────◇
           ◇               ◇      YES
          ◇ key switch: OFF ◇──────────────────────┐
           ◇      ?        ◇                        │
              ◇────┬────◇                           │
                   │ NO                             │
                   │        ╭─S131                  │
              ◇────┴────◇                           │
           ◇               ◇     YES                │
          ◇    NE>NE1?      ◇──────────────┐        │
           ◇               ◇               │        │
              ◇────┬────◇                  │        │
                   │ NO                     ▼ ╭─S134 │
                   │        ╭─S132    ┌───────────┐ │
              ◇────┴────◇            │ set LSTRG  │ │
           ◇               ◇    NO   │  to 230    │ │
          ◇    VB<10V?      ◇────────│            │◄┘
           ◇               ◇        └─────┬─────┘
              ◇────┬────◇                 │
                   │ YES                   │
                   │    ╭─S133             │  ╭─S135
           ┌───────────┐         ┌───────────┐
           │set pulse  │         │set pulse  │
           │rate to    │         │rate to    │
           │100pps     │         │200pps     │
           └─────┬─────┘         └─────┬─────┘
                 │                      │
                 │◄─────────────────────┘
                 ▼
        ┌─────────────────────┐
        │       RETURN        │
        └─────────────────────┘
```

# Fig.9

# Fig.10

# Fig.11

# Fig.12

# Fig.13

# Fig.14

## Fig.15A

## Fig.15B

# Fig.16A

# Fig.16B

# Fig.17

| | excitation phase mode (lower 3bits of LSTP) | | | | | | | |
|---|---|---|---|---|---|---|---|---|
| | 0 | 1 | 2 | 3 | 4 | 5 | 6 | 7 |
| AP-phase coil 46 | on | on | off | off | off | off | off | on |
| BP-phase coil 48 | off | on | on | on | off | off | off | off |
| AN-phase coil 47 | off | off | off | on | on | on | off | off |
| BN-phase coil 49 | off | off | off | off | off | on | on | on |

# Fig.18

# Fig.19

START

S201
LSACT<LSTRG ? — NO

YES

0203
LSACT>LSTRG ? — NO

YES

S202
LSACT←LSACT+2
LSTP←LSTP+2
XOP=OFF

S204
LSACT←LSACT-2
LSTP←LSTP-2
XOP=ON

S205
VB>12[V] ? — NO

YES

S211
VB>11[V] ? — NO

YES

S206
XOP=ON ? — NO

YES

S210
set pulse rate
to 150pps

S207
previous
XST=ON ? — NO

YES

S212
set pulse rate
to 100pps

S213
set pulse rate
to 50pps

S209
set pulse rate
to 150pps

S208
set pulse rate
to 200pps

RETURN

# Fig.20

| battery voltage VB | pulse rate |
|---|---|
| VB>12V | 200PPS (in opening direction) |
| | 150PPS (in opening direction, when motor is activated) |
| | 150PPS (in closing direction) |
| 11V<VB≦12V | 100PPS |
| VB≦11V | 50PPS |

# Fig.21

START

S300

key switch: OFF ?

— YES →

NO

S301

abnormality in fuel injection system ?

— YES →

NO

S302

VB>10[V] ?

— YES →

NO — S303

S310

LSTRG=fully closed position

LSTRG=9[step]

S304

LSTRG←(NE, QFIN)

S305

LSTRG<9[step] ?

NO

S306

XEN=OFF

YES

S307

XEN=ON ?

YES

NO — S309

S308

LSTRG=9[step]

LSTRG=-2[step] XRQ=ON

RETURN

# Fig.22